# EUROPÄISCHE PATENTSCHRIFT

(11) **EP 3 230 596 B1**
(45) Veröffentlichungstag und Bekanntmachung des Hinweises auf die Patenterteilung: **06.02.2019**
(21) Anmeldenummer: 16775234.4
(22) Anmeldetag: 29.09.2016
(51) Int. Cl.: F04D 25/08, F04D 27/00, F24F 11/77

(54) **VERFAHREN UND EINE VORRICHTUNG ZUM SENSORLOSEN REGELN EINES MIT EINEM EC-MOTOR BETRIEBENEN VENTILATORS EINES LÜFTUNGSGERÄTS**
METHOD AND APPARATUS FOR CONROLLING, WITHOUT SENSORS, AN EC MOTOR-OPERATED FAN OF A VENTILATION DEVICE
PROCÉDÉ ET DISPOSITIF DE RÉGULATION SANS CAPTEUR D'UN VENTILATEUR À MOTEUR EC D'UN APPAREIL DE VENTILATION

(30) Priorität: 29.09.2015 DE 102015012462
(43) Veröffentlichungstag der Anmeldung: 18.10.2017
(73) Patentinhaber: LUNOS Lüftungstechnik GmbH für Raumluftsysteme, 13593 Berlin (DE)
(72) Erfinder: MERSCHER, Michael, 14612 Falkensee (DE); STECKENBORN, Michael, 12529 Schönefeld (DE)
(74) Vertreter: Eisenführ Speiser
(86) Internationale Anmeldenummer: PCT/EP2016/073302
(87) Internationale Veröffentlichungsnummer: WO 2017/055476

(56) Entgegenhaltungen:
- DE-A1- 10 035 829
- DE-A1-102011 106 962
- DE-A1-102012 014 559
- Michael B Schmitz ET AL: "T. Dufner, Dezentrale Raumbelüftung -sensorlose Volumenstromregelung", , 5. Juli 2014 (2014-07-05), XP055327570, Gefunden im Internet: URL:http://www.elektronikpraxis.vogel.de/w aermemanagement/articles/444972/ [gefunden am 2016-12-09] in der Anmeldung erwähnt

## Beschreibung

Die Erfindung betrifft ein Verfahren und eine Vorrichtung zum Regeln eines mit einem EC-Motor betriebenen Ventilators eines Lüftungsgeräts.

Für die Be- und Entlüftung z.B. von Wohnungen oder Häusern mit Lüftungssystemen ist es oft erforderlich, dass Lüftungsgeräte mit Rohrleitungen für die Luftführung verwendet werden. In den Rohrleitungen wird Zu- oder Abluft befördert, welche durch einen Ventilator oder mehrere Ventilatoren des Lüftungsgeräts bewegt wird, um eine gewünschte Volumenstromstärke zu erzielen. Als Ventilator werden zum Beispiel RadialVentilatoren oder AxialVentilatoren eingesetzt.

Rohrlängen, Rohrdurchmesser, Rohrmaterialien, aber auch die Gestaltung weiterer Teile eines Lüftungsgeräts, wie etwa die Gestaltung eines Luftauslasses, werden vom Hersteller des Lüftungsgeräts sehr individuell bestimmt. Es können auch mehrere Ventilatoren in ein und demselben Lüftungsgerät vorgesehen werden. Derartige Gestaltungsmerkmale sind einem Hersteller des im Lüftungsgerät verwendeten Ventilators unbekannt.

Bei der Herstellung eines Lüftungsgeräts sind im späteren Einsatz des Lüftungsgeräts relevante Informationen unbekannt. Beispielsweise können in einem Gebäude, in welchem das Lüftungsgerät zum Einsatz kommt, mehrere an dieselbe Rohrleitung angeschlossene Lüftungsgeräte mit jeweiligen Ventilatoren vorgesehen sein. Die Rohrleitungen können aus unterschiedlichen Materialien bestehen und unterschiedliche oder sogar variable Durchmesser oder Abmessungen (freie Querschnitte) aufweisen. Auch äußere Faktoren wie Luftdruck, Windlast oder thermisches Verhalten von Luftmassen (z.B. an einer erwärmten Hausfassade) sind bei der Herstellung meist unbekannt oder hängen sehr stark von individuellen Begebenheiten ab. Auch Auslässe für die Luft wie z.B. Lüftungsgitter oder Dachhauben sind dem Hersteller des Lüftungsgerätes bzw. dem Hersteller des Ventilators meist unbekannt und variieren von Situation zu Situation.

Ein Lüftungssystem soll möglichst optimal auf individuelle Begebenheiten ausgelegt sein. Die berechneten und notwendigen Volumenströme müssen dann im Betrieb auch tatsächlich eingehalten werden. Insbesondere sollen sie nicht von den vorab berechneten Werten abweichen und nach Möglichkeit nicht schwanken. Ein konstanter Volumenstrom ist wesentlicher Bestandteil einer guten Lüftungsplanung.

Ein Ventilator eines Lüftungsgeräts muss also in der Lage sein, erhebliche Unterschiede im Druck in der Rohrleitung und beim Strömungswiderstand in der Rohrleitung auszugleichen, um möglichst konstant eine gewünschte Volumenstromstärke zu erzielen.

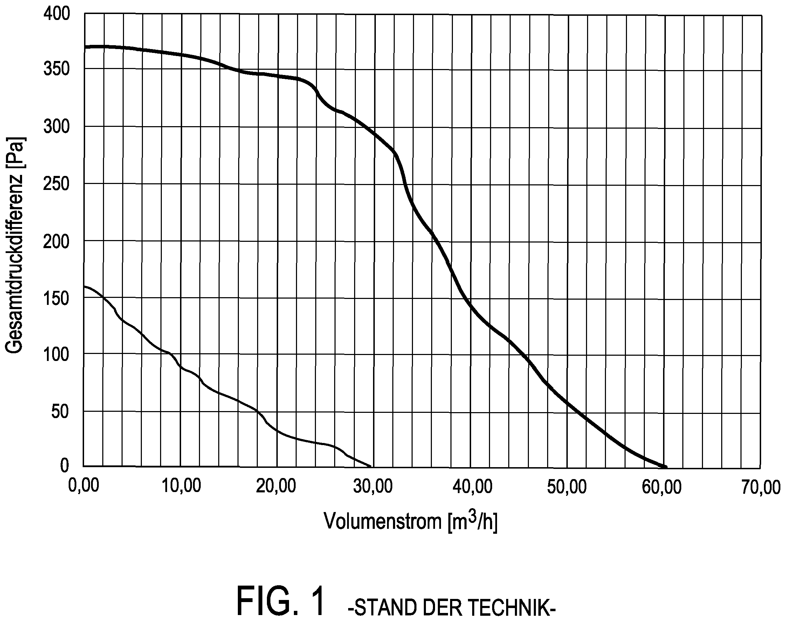

Es ist bekannt, dass ein Ventilator eine so genannte "aufgeprägte" Ventilatorkennlinie besitzt, die sein Verhalten ohne Regeleinfluss beschreibt. Eine solche Kennlinie wird auch als Ventilatorkennlinie bezeichnet. Ein schematisches Beispiel solcher Ventilatorkennlinien gemäß dem Stand der Technik zeigt Fig. 1. In Fig. 1 ist eine statische Druckdifferenz (der Gegendruck) in linearen Einheiten von Pa auf der Ordinate aufgetragen. Auf der Abszisse ist ein vom Ventilator beförderter Volumenstrom in linearen Einheiten von m³/h aufgetragen. Hierbei handelt es sich um einen unter bestimmten standardisierten Bedingungen gemessenen Norm-Volumenstrom. Fig. 1 zeigt für einen Ventilator mit EC-Motor zwei Kennlinien, die sich in ihrem Ausgangswert des freiblasenden Volumenstroms unterscheiden. Die Kennlinien sind charakteristisch für einen bekannten Radiallüfter mit EC-Motor in Abluftgeräten. Ohne Gegendruck, also freiblasend, wird ein jeweiliger maximaler Volumenstrom erzielt. Mit zunehmendem Gegendruck nimmt der Volumenstrom kontinuierlich ab und verschwindet bei einem bestimmten Wert des Gegendrucks völlig. Es ist erkennbar, dass beide Kennlinien ausgehend vom jeweiligen freiblasenden Volumenstrom von 30 m³/h beziehungsweise 60m³/h mit steigendem Gegendruck einen Abfall des Volumenstroms zeigen. Ein "konstanter" Volumenstrom ist so nicht darstellbar. Abhängig von den jeweiligen Bedingungen vor Ort variiert der Gegendruck und damit der zur Verfügung stehende Volumenstrom sehr stark.

Der Volumenstrom eines Lüftungssystems ist also vom tatsächlich vorhandenen Gegendruck in der Abluftleitung abhängig. Ebenso kann die nachströmende Luft, also der Unterdruck im Gebäude den Volumenstrom eines Lüftungssystems beeinflussen. Entsteht z.B. ein Unterdruck im Gebäude durch mangelnde Nachströmung von Frischluft, so entsteht ein weiterer Widerstand, der vom Lüftungssystem überwunden werden muss.

Ein Verhalten eines Lüftungsgeräts (auch kurz als Lüfter bezeichnet) entsprechend der in Fig. 1 dargestellten Ventilatorkennlinie hat viele Nachteile. Der gewünschte Soll-Volumenstrom eines Lüftungsgeräts wird in der Planung eines Lüftungssystems aufgrund verschiedener Parameter des konkreten Einsatzfalls genau berechnet. Dieser Soll-Volumenstrom muss später im Betrieb des Lüftungssystems so genau wie möglich eingehalten werden, damit beispielsweise ein vorgegebener Luftfeuchtigkeits- und CO₂-Pegel in einer Wohnung eingehalten werden kann. Wird der Soll-Volumenstrom unterschritten, wird zu wenig Luft ausgetauscht, und es kann zu einer Anreicherung von Luftfeuchtigkeit, CO₂ oder sonstigen Gasen und Verschmutzungen in der Wohnung kommen. Eine erhöhte Luftfeuchtigkeit kann bauliche Schäden verursachen.

Es ist daher wünschenswert, Ventilatoren bereitzustellen, die in ihrem jeweiligen Arbeitsbereich eine möglichst steile Ventilatorkennlinie haben, also bei einem steigenden Gegendruck möglichst lange einen konstanten Volumenstrom halten können.

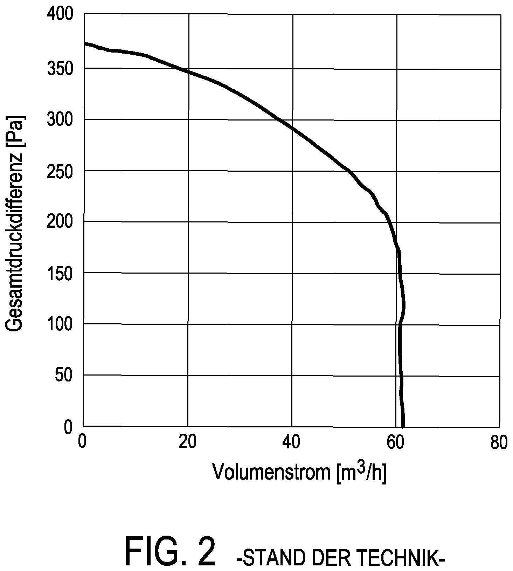

Es ist bekannt, einen Ventilator mit Kondensatormotor in einem Lüftungsgerät zu verwenden. Durch den speziellen Aufbau des Kondensatormotors und seines aufgeprägten Regelverhaltens, welches sich durch den Betrieb der angeschlossenen Kondensatoren ergibt, wird ohne externe Regelung, also "automatisch" eine gewisse Volumenstromkonstanz erreicht, die der gewünschten steilen Ventilatorkennlinie nahe kommt. Eine Beispielkennlinie zeigt Fig. 2. Nachteilig bei dieser Technik ist jedoch eine hohe Leistungsaufnahme des Kondensatormotors, welche sich aus einem relativ geringen Wirkungsgrad des Motors und der notwendigen Steuerung ergibt. In vielen Anwendungsfällen muss darüber hinaus die Soll-Volumenstromstärke veränderbar sein. So muss ein Lüftungssystem beispielsweise in einem Bad bei Abwesenheit von Nutzern eine geringere Volumenstromstärke erzielen als etwa beim Duschen, wenn eine hohe Feuchtelast erzeugt wird. Um bei Verwendung eines Ventilators mit Kondensatormotor verschiedene Volumenstromstärken mit ein und demselben Ventilator erzielen zu können, müssen mehrere Kondensatoren verbaut werden. Insbesondere muss pro erzielbarem Wert der Volumenstromstärke mindestens ein Kondensator verbaut werden, was erhebliche Kosten und auch Platzprobleme mit sich bringt. Ein Kondensator hat etwa die Abmessungen 1,5 x 2 x 2,5 cm. Da Energieeffizienz immer wichtiger wird, erweist sich auch unter diesem Aspekt ein Ventilator mit Kondensatormotor im Ergebnis als nicht geeignet.

Weiterhin ist es bekannt, Ventilatoren von Lüftungsgeräten mit EC-Motoren auszustatten. Als EC-Motor werden bürstenlose Gleichstrommotoren bezeichnet. Die Bezeichnung EC ist eine Abkürzung für den englischen Ausdruck "electrically commutated". Mit anderen Worten erfolgt bei diesen Motoren die Kommutierung (Stromwendung) nicht mechanisch wie etwa mit einer Kohlebürste, sondern elektrisch, etwa mit Halbleiterschaltern. Andere übliche Bezeichnungen solcher EC-Motoren sind BL-Motor oder BLDC-Motor. Ein EC-Motor wird über unterschiedliche Motorwicklungen eines Stators angesteuert. Die Motorwicklungen werden z.B. abhängig von der Lage eines Permanentmagneten auf einem Rotor angesteuert. So wird ein Magnetfeld erzeugt, welches nahezu ideal am Motor anliegt, was eine hohe Effizienz des EC-Motors ermöglicht. Für diese Art der Ansteuerung ist es erforderlich, dass die Lage des Rotors zum Stator bekannt ist. Dies kann auf verschiedene an sich bekannte Weisen erfolgen, z.B. mittels eines Hall-Sensors und eines Magneten. Man kann mit einem EC-Motor im Vergleich zu anderen Motoren etwa 50% Ersparnis bei der Leistungsaufnahme erzielen. Darüber hinaus haben EC-Motoren gegenüber Kondensator-Motoren den Vorteil, dass bei Anwendungen in der Lüftungstechnik mit einem Ventilator allein durch eine Steuerung des EC-Motors verschiedene Volumenströme erzielt werden können.

EC-Motoren haben häufig eine gewisse interne Regelung, bei der jedoch lediglich die Leistungsaufnahme des EC-Motors in etwa konstant gehalten wird. Nachteilig bei Anwendungen von EC-Motoren in der Lüftungstechnik ist eine "schwache" Ventilatorkennlinie. Der Volumenstrom von Ventilatoren, die mit einem EC-Motor betrieben werden, sinkt ausgehend von einer Volumenstromstärke im freiblasenden Betrieb mit steigendem Gegendruck kontinuierlich. Der Ventilatorkennlinie fehlt also die wünschenswerte Steilheit und entspricht einer Kennlinie, wie sie die Diagramme der Fig. 1 darstellen.

Es ist daher bekannt, bei Verwendung eines EC-Motors in einem Lüftungsgerät eine aufwändigere Regelvorrichtung vorzusehen, um den Volumenstrom bei variierendem Gegendruck möglichst konstant zu halten. Üblich ist die Verwendung von Sensoren in einem zum Lüftungsgerät gehörigen Ventilatorrohr, zur Erfassung des Gegendrucks, um auf Grundlage dieser Information die Drehzahl des Ventilators bei veränderlichem Gegendruck zur Einhaltung des vorgegebenen Soll-Volumenstroms gezielt verändern zu können. Es ist weiterhin bekannt, zu diesem Zweck alternativ oder zusätzlich Volumenstrom-Sensoren zu verwenden.

Die Verwendung solcher Sensoren hat jedoch den Nachteil eines hohen technischen Aufwands, zumal in typischen Lüftungsanwendungen im Vergleich mit dem Atmosphärendruck sehr geringe Werte des Gegendrucks auftreten und daher sehr empfindliche Sensoren für Druck oder Volumenstrom verwendet werden müssen. Solche Sensoren reagieren darüber hinaus empfindlich gegenüber Verschmutzung und können gegebenenfalls leicht zu einem fehlerhaften Regelverhalten führen. Schließeich ist bei Volumenstromsensoren der korrekte Einbau in ein Lüftungsgerät nicht einfach, weil Messergebnisse der Volumenstromstärke in einem Rohr allein in Abhängigkeit von der Lage des Sensors variieren können und somit leicht zu einem unerwünschten Regelverhalten führen können.

DE 10 2011 106 962 A1 beschreibt ein Verfahren zum Konstanthalten des Volumens eines Luftstroms basierend auf der Kenntnis einer Soll-Luftmenge, eines Ist-Motorstromes und der Motorgeschwindigkeit. Das Verfahren dient zum Regeln eines mit einem EC-Motor betriebenen Ventilators eines Lüftungsgeräts auf einen Arbeitspunkt, zum Erzielen und Halten einer vorgegebenen Soll-Volumenstromstärke des Lüftungsgeräts ohne Verwendung eines Drucksensors und ohne Verwendung eines Volumenstromsensors und umfasst:
- Bereitstellen eines Feldes von Arbeitspunkten für unterschiedliche Werte der Soll-Volumenstromstärke, wobei ein jeweiliger Arbeitspunkt für einen jeweils gegebenen Wert einer Motorsteuergröße des EC-Motors angibt, welcher Wert einer Motorregelgröße des EC-Motors eine jeweilige vom Ventilator zu erzeugende Soll-Volumenstromstärke des Lüftungsgeräts erzielt, die Motorsteuergröße mit einer Leistungsaufnahme des EC-Motors und die Motorregelgröße mit einer Drehzahl des EC-Motors positiv korreliert und wobei die bei unterschiedlichen Druckdifferenzen zwischen Eingang und Ausgang des Lüftungsgeräts einer jeweiligen Soll-Volumenstromstärke zugeordneten Arbeitspunkte in ihrer Gesamtheit nachfolgend als der Soll-Volumenstromstärke zugeordnete Kennlinie bezeichnet werden;
- Empfangen eines Vorgabe-Wertes der Soll-Volumenstromstärke;
- Ermitteln und Setzen eines Arbeitspunktes auf einer ersten Kennlinie, die dem Vorgabe-Wert der Soll-Volumenstromstärke zugeordnet ist, und Anfahren des dem gesetzten Arbeitspunkt zugeordneten Wertes der Motorsteuergröße;
- Regelmäßig wiederholtes Erfassen eines momentanen Wertes der Motorregelgröße nach dem Anfahren des Wertes der Motorsteuergröße zum Detektieren eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist.

DE 100 35 829 A1 betrifft ein Verfahren zum Betreiben einer Lüftung über eine Drehzahlregelung basierend auf einem Soll-Ist-Vergleich des Volumenstroms. DE 10 2012 014 559 A1 beschreibt einen Lüfter mit einem Drehzahlregler und einem Leistungsregler.

In der Industrie eingesetzte bekannte Verfahren zur Regelung und Ansteuerung von Ventilatoren mit EC-Motoren sind darauf beschränkt, dass ein Ventilator z.B. zum Kühlen von Bauteilen in einem Anwendungsgerät verwendet wird. Die Einbausituation des zu kühlenden Bauteils im Anwendungsgerät ist bekannt, und wesentliche Parameter verändern sich nicht oder nur in geringem Maße während des Betriebs. Beispielsweise können zwar Filter verschmutzen. Jedoch treten dabei nicht solche großen variablen Druckdifferenzen auf, wie sie beispielsweise bei Anwendungen in der Wohnungslüftung zu verzeichnen sind. Meist sind in bekannten Anwendungsfällen auch keine hohen Anforderungen an die Volumenstromkonstanz gesetzt.

Bei genauer zu steuernden Volumenströmen, z.B. in Laboranwendungen, werden immer zusätzliche Sensoren zur Erfassung des Volumenstroms eingesetzt. So sind z.B. Thermosensoren an Bauteilen angebracht, welche gekühlt werden sollen. Steigt die Temperatur, so wird die Drehzahl des Ventilators erhöht. Wie genau der Volumenstrom dabei verändert wird, spielt keine Rolle, solange der Volumenstrom nur erhöht wird. Steigt die Temperatur weiter an, wird die Drehzahl weiter erhöht, und so weiter.

Es reicht also in solchen "üblichen" Anwendungen außerhalb der Raumlüftungstechnik aus, einen zuvor bekannten Arbeitspunkt anzufahren, ohne dass dieser Arbeitspunkt durch äußere Parameter wesentlich veränderlich ist. In der Lüftungstechnik wären solche Verhältnisse nur unter besonders zugeschnittenen, in aller Regel unrealistischen Bedingungen erzielbar. Wenn ein Lüftungssystem in einer einzelnen Wohneinheit, einem einzelnen Haus oder einem einzelnen Büro o.ä. unter im Detail bekannten und unveränderlichen Randbedingungen (z.B. Dichtheit des Gebäudes und Gegendruck in den Leitungen) eingesetzt würde, so könnte das Lüftungssystem eingestellt werden. Eine Regelung wäre dann nicht erforderlich. Solche stark einschränkenden Bedingungen sind jedoch für die Praxis nicht brauchbar.

Wünschenswert ist daher ein Verfahren zum sensorlosen Regeln eines mit einem EC-Motor betriebenen Ventilators eines Lüftungsgeräts auf einen Arbeitspunkt, zum Erzielen und Halten einer vorgegebenen Soll-Volumenstromstärke.

Gemäß einem ersten Aspekt betrifft die vorliegende Erfindung ein Verfahren zum Regeln eines mit einem EC-Motor betriebenen Ventilators eines Lüftungsgeräts auf einen Arbeitspunkt, zum Erzielen und Halten einer vorgegebenen Soll-Volumenstromstärke des Lüftungsgeräts ohne Verwendung eines Drucksensors und ohne Verwendung eines Volumenstromsensors, umfassend
- Bereitstellen eines Feldes von Arbeitspunkten für unterschiedliche Werte der Soll-Volumenstromstärke, wobei
- die unterschiedlichen Werte der Soll-Volumenstromstärke einen Differenzbetrag von mindestens 0,5 m³/h von einander aufweisen,
- ein jeweiliger Arbeitspunkt für einen jeweils gegebenen Wert einer Motorsteuergröße des EC-Motors angibt, welcher Wert einer Motorregelgröße des EC-Motors eine jeweilige vom Ventilator zu erzeugende Soll-Volumenstromstärke des Lüftungsgeräts erzielt,
- die Motorsteuergröße mit einer Leistungsaufnahme des EC-Motors und die Motorregelgröße mit einer Drehzahl des EC-Motors positiv korreliert und wobei
- die bei unterschiedlichen Druckdifferenzen zwischen Eingang und Ausgang des Lüftungsgeräts einer jeweiligen Soll-Volumenstromstärke zugeordneten Arbeitspunkte in ihrer Gesamtheit nachfolgend als der Soll-Volumenstromstärke zugeordnete Kennlinie bezeichnet werden;
- Empfangen eines Vorgabe-Wertes der Soll-Volumenstromstärke;
- Ermitteln und Setzen eines Arbeitspunktes auf einer ersten Kennlinie, die dieser Soll-Volumenstromstärke zugeordnet ist, und Anfahren des dem gesetzten Arbeitspunkt zugeordneten Wertes der Motorsteuergröße;
- Regelmäßig wiederholtes Erfassen eines momentanen Wertes der Motorregelgröße nach dem Anfahren des Wertes der Motorsteuergröße zum Detektieren eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist;
- in Reaktion auf ein Vorliegen des Abweichungsfalls: Ermitteln und Setzen eines auf einer anderen Kennlinie liegenden temporären Hilfs-Arbeitspunktes aus dem Feld der Arbeitspunkte, der einer von dem Vorgabe-Wert der Soll-Volumenstromstärke verschiedenen Hilfswert der Soll-Volumenstromstärke zugeordnet ist, und Anfahren eines dem gesetzten Hilfs-Arbeitspunkt zugeordneten Hilfswertes der Motorsteuergröße; wobei bei Detektieren eines Abweichungsfalls auch bezüglich des aktuell gesetzten Hilfs-Arbeitspunkts ausgehend vom aktuell gesetzten Hilfs-Arbeitspunkt das Ermitteln, Setzen, Anfahren und Erfassen iterativ ausgeführt wird, bis nach dem Anfahren eines jeweils gesetzten neuen Hilfs-Wertes der Motorsteuergröße keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert ist;
- ausgehend vom verifizierten Hilfs-Arbeitspunkt: Ermitteln und Anfahren eines hinsichtlich des momentanen Wertes der Motorsteuergröße nächstliegenden Arbeitspunktes auf der ersten Kennlinie als neuer gesetzter Arbeitspunkt, sowie
- im Falle des Detektierens eines erneuten Abweichungsfalls bezüglich des neuen gesetzten Arbeitspunktes der Motorregelgröße: Wiederholen der beschriebenen Verfahrensführung ab dem Ermitteln und Setzen eines auf einer anderen Kennlinie liegenden Hilfs-Arbeitspunktes.

Das erfindungsgemäße Verfahren zeichnet sich dadurch aus, dass es eine sensorlose automatische Einstellung und Einhaltung eines gewünschten Arbeitspunktes mit einer vorgegebenen Soll-Volumenstromstärke ermöglicht.

Zwar beschreibt schon die Veröffentlichung M.B. Schmitz, T. Dufner, Dezentrale Raumbelüftung -sensorlose Volumenstromregelung, Elektronikpraxis Nr. 9, 2.5.2014, S. 58-59, Verlag Vogel Business Media, ein Verfahren zum Steuern einer Lüfterdrehzahl ohne Verwendung dezidierter Sensoren für Druck oder Volumenstrom. Dazu wird bei dem beschriebenen Verfahren ein Strom-Volumen-Druck-Kennfeld in der Lüfterelektronik gespeichert und der Strom bei gegebener Drehzahl mit einem Sollwert verglichen, der bei dieser Drehzahl dem Soll-Volumenstrom entspricht. Dieser Stromwert kann sich verändern. In diesen Fällen soll die Lüftersteuerung die Drehzahl solange verändern, bis sich wieder eine eindeutige Kombination aus Drehzahl, Volumenstrom und elektrischem Strom einstellt. Bei vorgegebenem Wert für den Volumenstrom soll bei dieser Verfahrensführung bei steigendem Gegendruck der Lüfter schneller drehen, wodurch der Strom steigt.

Die Erfinder haben in Versuchen mit Lüftungsgeräten, die diese sensorlose Verfahrensführung implementieren, festgestellt, dass ein Einstellen und Halten eines angestrebten Wertes eines Soll-Volumenstroms nach dem Einschalten des Lüftungsgeräts tatsächlich nicht zufriedenstellend funktioniert.

Die vorliegende Erfindung fußt auf der Erkenntnis, dass in der Praxis tatsächlich im gesamten möglichen Kennlinienfeld des Lüfters gegebene Werte der Stromaufnahme oder der Leistungsaufnahme mit zwei oder mehr Werten der Drehzahl in Verbindung stehen. Beispielsweise ist ein niedriger Wert der Leistungsaufnahme bei niedrigen Volumenströmen und hohem Gegendruck messbar. Derselbe Wert der Leistungsaufnahme tritt jedoch auch bei höherem Volumenstrom, aber geringerem Gegendruck auf. Mit anderen Worten kann ein und derselbe Wert der Leistungsaufnahme also an verschiedenen Arbeitspunkten gemessen werden. In der Praxis sind solche Mehrfachbelegungen immer vorhanden. Fertigungstechnische Schwankungen im Ventilator, dem Gehäuse oder anderen Bauteilen führen zu doppelt belegten Arbeitspunkten. Ebenso können Einsatzbedingungen des Lüftungssystems unter für den Hersteller des Lüftungssystems unbekannten Bedingungen, was z.B. den Gegendruck o.ä. betrifft, doppelt belegte Arbeitspunkte herbeiführen. Beispielsweise bewirken dies schnelle Druckschwankungen bei Wind.

Betrachtet man als Beispiel weiteres den Extremfall gerätespezifisch maximaler elektrischer Leistungsaufnahme, so ist diese tatsächlich sogar im wesentlichen unabhängig von der damit realisierten Volumenstromstärke, mit anderen Worten: die gerätespezifisch maximale elektrische Leistungsaufnahme ist für viele verschiedene Volumenstromstärken gleich. Diese maximale Leistungsaufnahme ist allein durch den EC-Motor und seine Elektronik begrenzt. Es gibt daher grundsätzlich "unendlich" viele Schnittpunkte unterschiedlicher Kennlinien, wenn ein maximaler Gegendruck erreicht ist, welcher die maximale elektrische Leistungsaufnahme bedingt, um eine jeweils gewünschte Soll-Volumenstromstärke zu erzielen. In ähnlicher Weise gibt es jedoch auch bei einem geringeren (aber vorhandenen) Gegendruck - und Gegendruck ist in jedem praktischen Fall zumindest zeitweise vorhanden - "Doppelungen", die es nicht erlauben, mit der einleitend beschriebenen Verfahrensführung ohne Verwendung eines Drucksensors und ohne Verwendung eines Volumenstromsensors, also "sensorlos" eine Information über den tatsächlich erzielte Volumenstromstärke zu ermitteln.

Ein Arbeitspunkt ist also aufgrund der Eigenschaften des EC-Motors grundsätzlich nicht umkehrbar eindeutig. Unterschiedliche Arbeitspunkte können sich in den Werten eines oder zweier Parameter gleichen. Es können grundsätzlich einem gegebenen Wertepaar der Motorregelgröße und der Motorsteuergröße je nach Gegendruck unterschiedliche Werte der Volumenstromstärke zugeordnet sein, so dass das Wertepaar tatsächlich für unterschiedliche Arbeitspunkte gültig ist. Beispielsweise kann derselbe Wert Stromaufnahme im Kennlinienfeld mehrfach vorkommen, da ja nicht bekannt ist, wie hoch der Gegendruck in der Rohrleitung ist. Auch können einem gegebenen Wertepaar der Motorregelgröße und der Volumenstromstärke je nach Gegendruck unterschiedliche Werte der Motorsteuergröße zugeordnet sein, so dass das Wertepaar tatsächlich für unterschiedliche Arbeitspunkte gültig ist. Es können alternativ einem gegebenen Wertepaar der Volumenstromstärke und der Motorsteuergröße je nach Gegendruck unterschiedliche Werte der Motorregelgröße zugeordnet sein, so dass auch hier das Wertepaar tatsächlich für unterschiedliche Arbeitspunkte gültig ist. Da es in einer solchen Situation zahlreiche Punkte im Kennlinienfeld gibt, welche zumindest doppelt belegt sind, kann mit der oben beschriebenen bekannten Verfahrensführung ein Wert des Volumenstroms nicht mit der erforderlichen Eindeutigkeit angefahren werden.

Es ist der sensorlosen Regelung nach dem genannten Verfahren im Ergebnis nicht möglich, festzustellen, in welchem Arbeitspunkt ein Lüftungsgerät sich aktuell tatsächlich befindet. Daher funktioniert das beschriebene bekannte Regelungsverfahren nach der Auffassung der Erfinder in den allermeisten Anwendungsfällen nicht und kann je nach Situation sogar zum völligen Versagen eines Lüftungssystems führen.

Anders als diese bereits bekannte sensorlose Verfahrensführung beruht das erfindungsgemäße Verfahren auf der Erkenntnis, dass in der Praxis im Kennlinienfeld ein eindeutiger Zusammenhang zwischen der Volumenstromstärke und den Arbeitsparametern des EC-Motors wie elektrischer Stromstärke, Leistungsaufnahme und Drehzahl tatsächlich grundsätzlich nicht gegeben ist und auch nicht ohne Weiteres automatisch auffindbar ist. Das Verfahren der vorliegenden Erfindung geht aus von einem Bereitstellen eines Feldes von Arbeitspunkten für unterschiedliche Werte der Soll-Volumenstromstärke, wobei die unterschiedlichen Werte der Soll-Volumenstromstärke einen Differenzbetrag von mindestens 0,5 m³/h von einander aufweisen. Das Einhalten dieses Mindest-Differenzbetrags erlaubt in der Praxis eine technisch genaue und verfahrenstechnisch eindeutige Unterscheidung der Kennlinien und Arbeitspunkte und stellt zugleich einen für die Verfahrensführung im Hinblick auf die Verwendung unterschiedlicher Bauteile und ihre Fertigungstoleranzen optimierten Wert dar.

Bei dem erfindungsgemäßen Verfahren gibt ein jeweiliger Arbeitspunkt daher genau einen Wert einer Motorsteuergröße des EC-Motors - beispielsweise in Form eines digitalen Wertes einer Soll-Drehzahl oder in Form eines analogen Signals wie eines Spannungs- oder Stromsignals, welches dem Motor vorgibt, wie schnell er drehen soll -, genau einen Wert einer Motorregelgröße des EC-Motors und genau eine mit diesen Werten der Motorsteuergröße und der Motorregelgröße vom Ventilator zu erzielende Volumenstromstärke an.

Weiterhin wird unter der beschriebenen erfindungsgemäßen Vorgabe des Feldes von Arbeitspunkten, bei dem einander nächstbenachbarte Werte der den Arbeitspunkten zugeordneten Soll-Volumenstromstärke einen Mindestabstand von mindestens 0,5 m³/h von einander haben, das temporäre Anfahren von Hilfs-Arbeitspunkten eingesetzt, denen eine Hilfs-Volumenstromstärke zugeordnet ist, die von dem Vorgabe-Wert der Soll-Volumenstromstärke abweicht. Zum Anfahren eines jeweiligen Hilfs-Arbeitspunkts wird die ihm zugeordnete Motorsteuergröße eingestellt, die Motorregelgröße erfasst und die Übereinstimmung mit dem am Hilfs-Arbeitspunkt vorgesehenen Wert der Motorregelgröße überprüft. Es werden so lange Hilfs-Arbeitspunkte angefahren, bis keine Abweichung des jeweils erfassten Wertes der Motorregelgröße vom zu erwartenden Wert am jeweils eingestellten Hilfs-Arbeitspunkt vorliegt und der Hilfs-Arbeitspunkt somit verifiziert ist. Ausgehend von diesem verifizierten Hilfs-Arbeitspunkt wird dann ein neuer Arbeitspunkt auf der dem gewünschten Soll-Volumenstrom zugeordneten Kennlinie gesetzt, wobei dieser neue gesetzte Arbeitspunkt derjenige auf der Kennlinie ist, der dem verifizierten Hilfs-Arbeitspunkt am nächsten liegt. Gelingt das Anfahren des neuen gesetzten Arbeitspunktes nicht oder wird nach Erreichen dieses neuen gesetzten Arbeitspunktes eine Abweichung der Motorregelgröße erfasst, wiederholt sich das beschriebene Vorgehen mit einem oder mehreren neuen Hilfs-Arbeitspunkten, bis ein dann aktueller Hilfs-Arbeitspunkt verifiziert ist und von dort ausgehend wiederum ein neuer Arbeitspunkt gesetzt werden kann, der den Vorgabe-Wert der Soll-Volumenstromstärke erzielt.

Mit der beschriebenen Verfahrensführung gelingt nach Kenntnis der Erfinder erstmalig ein selbsttägiges Regeln eines mit einem EC-Motor betriebenen Ventilators eines Lüftungsgeräts auf einen Arbeitspunkt, zum Erzielen und Halten einer vorgegebenen Soll-Volumenstromstärke des Lüftungsgeräts ohne Verwendung eines Drucksensors und ohne Verwendung eines Volumenstromsensors.

Unter positiver Korrelation zwischen zwei Größen wird im Rahmen der vorliegenden Anmeldung eine mathematische Beziehung verstanden, bei der, wenn eine der beiden Größen sich im Wert in einem bestimmten Sinne (also entweder positiv oder negativ) ändert, die andere der beiden Größen sich im gleichen Sinne ändert. Diese Beziehung kann in unterschiedlichen Ausführungen, je nach betrachtetem Größenpaar, linear oder nicht-linear sein.

Nachfolgend werden Ausführungsbeispiele des erfindungsgemäßen Verfahrens beschrieben.

Das Feld von Arbeitspunkten für unterschiedliche Werte der Soll-Volumenstromstärke kann für die unterschiedlichen Werte der Soll-Volumenstromstärke einen größeren Differenzbetrag als 0,5 m³/h von einander aufweisen. In einer technisch einfacheren, jedoch für viele Anwendungen hinreichend genauen Ausführungsform ist der Differenzbetrag zwischen unterschiedlichen Werten der Soll-Volumenstromstärke mindestens 1m³/h. Es versteht sich, dass die Soll-Volumenstromstärke in anderen Einheiten als m³/h definiert werden kann, was technisch betrachtet jedoch keinen Unterschied bedeutet.

In bevorzugten Ausführungsformen wird bei der Bestimmung des nächstliegenden Arbeitspunktes oder generell für Abstandsbestimmungen zwischen Arbeitspunkten als Abstandsmaß zwischen zwei Arbeitspunkten eine Differenz von Beträgen der Motorsteuergröße an den betreffenden Arbeitspunkten verwendet. Die Motorsteuergröße korreliert wie erläutert positiv mit der Leistungsaufnahme. So kann in einer Ausführungsform eine Erfassung der Leistungsaufnahme erfolgen, beispielsweise über eine Erfassung sowohl der elektrischen Stromstärke als auch der angelegten Steuerspannung. Dies erfordert jedoch einen höheren technischen Aufwand, beispielsweise in Form eines Stromflusssensors zur Ermittlung der elektrischen Stromstärke. Einfacher ist es, anstelle der Stromstärke eine der Drehzahl des Motors entsprechende Größe zu nutzen. Die Drehzahl ist eine Größe, welche ohne zusätzlichen Erfassungs-Aufwand genutzt werden kann. Denn die Drehzahl wird in der Regel durch einen EC-Motor selbst sehr genau erfasst. Zum Erfassen der Motorregelgröße des EC-Motors wird in einer anderen Ausführungsform ein vom EC-Motor bereitgestelltes Positionssignal erfasst und aus mehreren an unterschiedlichen Zeitpunkten erfassten Positionssignalen eine von der Drehzahl des EC-Motors abhängige Größe bestimmt. Die Steuerspannung, die zum Betreiben des EC-Motors angelegt wird, ist ebenfalls bekannt und ohne zusätzlichen Aufwand als Messgröße bereitstellbar. Beide genannten Größen gemeinsam ermöglichen eine technische Repräsentation und besonders einfache Ermittlung einer mit der Leistungsaufnahme des EC-Motors korrelierenden Größe. Ein Produkt beider Größen, also der Steuerspannung und der Drehzahl, wird in einer weiteren Ausführungsform des Verfahrens als Motorsteuergröße verwendet. Durch das Bilden dieses Produkts werden Unterschiede zwischen naheliegenden bzw. nächstgelegenen Arbeitspunkten, also zwischen Soll- und Istwert leichter erkennbar. Dieses Produkt der Steuerspannung und der Drehzahl wird vorliegend auch als "Kennwert" eines Arbeitspunktes bezeichnet.

Ein jeweiliger Arbeitspunkt gibt wie oben erläutert für einen jeweils gegebenen Wert der Motorsteuergröße des EC-Motors an, welcher Wert der Motorregelgröße des EC-Motors eine jeweilige vom Ventilator zu erzeugende Soll-Volumenstromstärke erzielt, wobei die Motorsteuergröße mit der Leistungsaufnahme des EC-Motors und die Motorregelgröße mit der Drehzahl des EC-Motors korreliert. In bevorzugten Ausführungsformen des Verfahrens wird das Feld von Arbeitspunkten in Form einer oder mehrerer Berechnungsvorschriften zur Darstellung einer jeweiligen mathematischen Funktion bereitgestellt, die in unterschiedlichen Varianten eine Abhängigkeit der Leistungsaufnahme des EC-Motors, oder eine Abhängigkeit eines Produkts der Steuerspannung des EC-Motors und der Drehzahl des EC-Motors von der Steuerspannung des EC-Motors abbildet oder abbilden. Das Bereitstellen einer solchen Formel ist recht einfach machbar. Somit steht eine Funktion zur Verfügung, welche z.B. in Form eines Polynoms n-ten Grades zumindest einen Teil des Feldes von Arbeitspunkten beschreibt. So ist z.B. ein Polynom 3. oder 4. Grades mathematisch beherrschbar und recht einfach digital ablegbar. Es muss somit nicht jeder einzelne Punkt von einer Kennlinie gespeichert werden. Es reicht das Speichern der Formel und das spätere Einsetzen der notwendigen Werte um die Formel aufzulösen. Auf diese Weise kann der Speicherbedarf für die Ablage des Feldes von Arbeitspunkten reduziert werden.

In einer Ausführungsform ist dem der mindestens einen Berechnungsvorschrift umkehrbar eindeutig ein Wert der Volumenstromstärke zugeordnet. Ausgehend von den durch die Berechnungsvorschrift bei der Volumenstromstärke ermittelbaren Arbeitspunkte können weitere Arbeitspunkte mathematisch geschätzt werden, etwa durch Interpolation bei Vorliegen mehrerer Formeln für unterschiedliche Werte der Soll-Volumenstromstärke, oder durch Extrapolation, insbesondere falls nur eine einzige Formel bereitgestellt ist. Das Verfahren umfasst dann zusätzlich ein Ermitteln des zu setzenden Arbeitspunktes oder des auf einer anderen Kennlinie liegenden temporären Hilfs-Arbeitspunktes durch eine Schätzung unter Verwendung der mindestens einen Berechnungsvorschrift und eines Unterschieds zwischen der zu setzenden Soll- oder Hilfs-Volumenstromstärke und dem der Formel zugeordneten Wert der Volumenstromstärke.

Beispielsweise umfasst ein solches Verfahren ein Bereitstellen einer ersten Berechnungsvorschrift, welche einen ersten Satz Arbeitspunkte darstellt, die alle einer vorbestimmten Maximal-Soll-Volumenstromstärke zugeordnet sind, und ein Bereitstellen einer zweiten Berechnungsvorschrift, welche einen zweiten Satz Arbeitspunkte darstellt, die alle einer vorbestimmten Minimal-Soll-Volumenstromstärke zugeordnet sind. Dann erfolgt ein Ermitteln des zu setzenden Arbeitspunktes oder des auf einer anderen Kennlinie liegenden temporären Hilfs-Arbeitspunktes durch Interpolieren unter Verwendung der ersten und zweiten Berechnungsvorschrift und eines Unterschieds zwischen der zu setzenden Soll- oder Hilfs-Volumenstromstärke und der Minimal- sowie der Maximal-Sollvolumenstromstärke.

Als Berechnungsvorschrift können Polynome zum Beschreiben der Abhängigkeiten bei einem "kleinsten" Wert der Soll-Volumenstromstärke und bei einem "größten" Wert der Soll-Volumenstromstärke verwendet werden. Der kleinste Wert des Soll-Volumenstroms kann beispielsweise 15m³/h betragen, er kann aber für die Bildung anderer Ausführungsbeispiele auch kleiner gewählt werden. Der größte Wert kann beispielsweise 60m³/h betragen, kann aber in anderen Ausführungsbeispielen größer gewählt sein. Diese beiden Polynome werden als Rechenvorschrift hinterlegt. Nun kann man jede Kennlinie zwischen diesen beiden Kennlinien aus den Polynomen errechnen. Man interpoliert die notwendigen Punkte aus beiden Polynomen. Das geht sehr einfach und ist in der Praxis in der Regel genau genug.

Man kann mehr Polynome hinterlegen, um die Interpolation genauer zu gestalten.

Anstelle von Polynomen werden in anderen Ausführungsbeispielen andere mathematische Funktionen verwendet, die eine aus der Anpassung an die gemessenen Werte ermittelte Berechnungsvorschrift zur mathematischen Darstellung der Arbeitspunkte liefern.

Die Erfinder haben erkannt, dass jeder EC-Motor und damit im vorliegenden Anwendungsfall auch jeder Ventilator eines Lüftungsgeräts gewisse Toleranzen hat. Beispielsweise ist eine Drahtstärke von Kupferwicklungen in unterschiedlichen EC-Motoren des nominell gleichen Typs oder Modells leicht unterschiedlich. Auch die Lackdicke auf den Drähten der Kupferwicklungen ist nicht immer genau gleich, und die Drähte fallen beim Wickeln unterschiedlich aufeinander. Ebenso sind die verwendeten Magnete nicht alle genau gleich "stark", und andere elektronische Bauteile wie Spannungswandler haben auch gewisse Toleranzen. Mit anderen Worten sind manche individuellen Ventilatoren "stärker" oder "schwächer" als ein vorgegebener "Durchschnitt" oder "Standard". Dies würde bei gewünschter Volumenstromkonstanz dazu führen, dass ein individueller Ventilator und damit ein individuelles Lüftungsgerät tatsächlich mehr Volumenstrom oder weniger Volumenstrom fördert als gewünscht. Die Toleranzen der EC-Motoren übertragen sich somit auf den Volumenstrom während der Regelung. Nicht nur "freiblasend", sondern auch über einen gesamten Regelbereich würde ein vom Standard abweichender Ventilator mehr Volumenstrom oder auch weniger Volumenstrom fördern. Statt konstant 60m³/h beispielsweise 65m³/h oder nur 55m³/h. Eine zu hohe Förderleistung kann in Lüftungsanwendungen dazu führen, dass mehr Heizenergie als notwendig verschwendet wird.

Um trotzdem vorgegebene Volumenstrom-Anforderungen in einem Anwendungsfall präzise liefern zu können, umfasst die Berechnungsvorschrift in weiteren Ausführungsformen eine vom jeweiligen individuellen Ventilator unabhängige erste Teilvorschrift und eine vom jeweiligen individuellen Ventilator abhängige zweite Teilvorschrift. Die zweite Teilvorschrift kann beispielsweise in Form einer Multiplikation mindestens eines der mathematischen Terme der vom jeweiligen individuellen Ventilator unabhängigen ersten Teilvorschrift mit einem Skalierungsfaktor ausgebildet sein. Kompliziertere mathematische Operationen, die auch bei einem individuellen Ventilator für unterschiedliche Volumenstrom-Werte unterschiedlich ausfallen können, sind jedoch ebenfalls möglich und durch eine einfache Zahl abbildbar, beispielsweise in Form einer Codezahl, die einen Zugriff auf einen Satz von volumenstromabhängigen und ventilator-individuellen zweiten Teilvorschriften eröffnet. So können auf einfache Weise fertigungstoleranzbedingte Abweichungen gegenüber Standard-Leistungsdaten eines betreffenden Lüftertyps ausgeglichen werden. Die zweite Teilvorschrift wird typischerweise vor Inbetriebnahme des individuellen Ventilators oder Lüftungsgeräts in einem für diesen Ventilator individuellen Kalibrierungsprozess bestimmt.

Nachfolgend werden diese Ausführungsformen noch näher erläutert.

In einer einfachen Implementierung wird in einem solchen Kalibriervorgang eine Zahl ermittelt und in dem Motor abgelegt. Zur Ausführung der Berechnungsvorschrift wird dann die abgelegte Zahl zur Umsetzung der zweiten Teilvorschrift als Operand in einer vorbestimmten Rechenoperation hinzugezogen. Beispielsweise wird ein Polynom gemäß der ventilatorübergreifenden ersten Teilvorschrift, mit einer im Kalibrierungsprozess ermittelten Zahl mathematisch so verändert, dass die Abweichung des EC-Motors gegenüber dem Standard vollständig ausgelöscht wird. Ist der EC-Motor etwa "zu stark", wird das Polynom "schwächer" gemacht, so dass der Volumenstrom trotzdem präzises auf den gewünschten Wert eingestellt wird (z.B. 60m³/h), anders als es ohne Kalibrierung der Fall wäre (z.B. 65m³/h).

Der Kalibrierungsprozess an sich verwendet eine Vorrichtung, die Steuersignale aus dem EC-Motor auslesen und den Kalibrierwert in einen Speicherbereich des EC-Motors oder des Lüftungsgeräts einschreiben kann. Im Kalibrierungsprozess wird das Lüftungsgerät unter immer gleichen Bedingungen eingeschaltet. Vorzugsweise werden mehrere Volumenströme angefahren. So können auch Abweichungen bei einzelnen Volumenströmen erfasst werden, welche also nicht "konstant" bei allen einstellbaren Volumenstrom-Werten auftreten. Es kann auch vorkommen, dass sich eine Toleranz nur in einem bestimmten Volumenstrombereich auswirkt, nicht aber "überall".

Zum Kalibrierungsprozess gehört ein Soll- und Istabgleich der Drehzahlen und somit der Volumenströme. Beispielsweise würde ein Lüfter, der "stärker" ist, bei einer Soll-Drehzahl von 1000/min z.B. eine tatsächliche Drehzahl 1050/min erreichen. Diese Abweichungen werden im Rahmen der Kalibrierung in Abhängigkeit der einzelnen Volumenströme ausgewertet und dann nach einem vorbestimmten Algorithmus zu einer Zahl zusammengefasst, die somit die individuelle Abweichung des EC-Motors von einem Standard darstellt. In der Steuerelektronik wird diese Zahl angewendet, was selbstverständlich Kenntnis des erwähnten Algorithmus voraussetzt. So erreicht man eine um etwa 5% genauere Einhaltung der Kennlinie und damit einen genaueren Volumenstrom des fertigen Lüfters.

Das erfindungsgemäße Verfahren ist extrem genau und zuverlässig. Durch die Verfahrensführung kann ein beliebiger Arbeitspunkt angefahren und validiert werden, auch wenn mehrere Arbeitspunkte mit gleichen Leistungsaufnahmen, Drehzahlen und Volumenstromstärken, jedoch unterschiedlichen Drücken im Kennlinienfeld vorhanden sind. In manchen Anwendungsfällen ist eine derart präzise und zuverlässige Regelung nach dem erfindungsgemäßen Verfahren nicht in jeder Situation notwendig oder erwünscht. Daher sehen Ausführungsformen des erfindungsgemäßen Verfahrens als zusätzliche Verfahrensoption ein alternatives beschleunigtes Setzen und Anfahren eines Arbeitspunktes vor. Eine solche Ausführungsform umfasst vor dem Setzen eines Arbeitspunktes:
- Prüfen anhand der mindestens einen Berechnungsvorschrift für unterschiedliche Soll-Volumenstärken, ob ein jeweiliger ermittelter Arbeitspunkt zwei oder mehr Soll-Volumenstromstärken des Lüftungsgeräts zugeordnet ist;
- falls ja: Prüfen, ob ein vorbestimmtes Kriterium zur Durchführung einer beschleunigten Verfahrensführung unter Umgehung der beschriebenen Verfahrensführung ab dem Setzen des Arbeitspunktes vorliegt;
- falls das vorbestimmte Kriterium vorliegt: Ermitteln und Setzen eines Umgehungs-Arbeitspunktes unter Verwendung der Berechungsvorschrift, wobei der Umgehungs-Arbeitspunkt einer einzigen Volumenstromstärke im Abstand von mindestens 0,5 m³/h und maximal 10% vom Vorgabe-Wert der Soll-Volumenstromstärke zugeordnet ist; und
- anschließendes Anfahren des dem gesetzten Umgehungs-Arbeitspunkt zugeordneten Wertes der Motorsteuergröße.

Bei dieser Ausführungsform werden bei Vorliegen vorbestimmter Kriterien, die ein gewünschtes oder notwendiges beschleunigtes Regelungsverfahren auslösen, absehbare Regelungsverzögerungen umgangen, indem ein tolerabler Umgehungs-Arbeitspunkt ermittelt und gesetzt wird, der einer einzigen Volumenstromstärke im Abstand von mindestens 0,5 m³/h und maximal 10% vom Vorgabe-Wert der Soll-Volumenstromstärke zugeordnet ist. Eine anhand der Kennlinien bekannte "Doppelung" kann somit umgangen werden. Somit ist die Regelung sehr schnell. Ist eine Kennlinie notwendig, in der Doppelungen vorkommen können, wird dagegen das erfindungsgemäße Verfahren vollständig ausgeführt. Dadurch ist der Lüfter zwar langsamer in seinem Arbeitspunkt angekommen, dafür regelt er aber zu 100% genau und ist sicher in dem gewünschten Arbeitspunkt.

Als vorbestimmtes Kriterium kann beispielsweise jeweils allein oder in Kombination hinterlegt werden: eine Zeitspanne der Tageszeit (also nach Uhrzeit), eine Ortsidentifikation (beispielsweise eine Kennzeichnung mit der Bedeutung "Badezimmer"), ein Wert oder Wertebereich einer oder mehrerer Umgebungsgrößen (Luftfeuchtigkeit, Temperatur, Helligkeit oä) am Ort des Lüfters oder an einem anderen vorbestimmten Ort.

Wenn man also schneller regeln möchte, kann das erfindungsgemäße Verfahren zwar hinterlegt sein (der Lüfter ist in der Lage, das Verfahren auszuführen), unter vorbestimmten Umständen wird es aber nicht ausgeführt. Durch eine notwendige Untersuchung des Regelfeldes des Lüfters, ist der Arbeitsbereich des Lüfters und somit die so genannten Arbeitspunkt-"Doppelungen" bekannt.

Vorzugsweise wird bei dieser Ausführungsform das regelmäßig wiederholte Erfassen des momentanen Wertes der Motorregelgröße nach dem Anfahren des dem Umgehungs-Arbeitspunkt zugeordneten Wertes der Motorsteuergröße zum Detektieren eines Abweichungsfalls, in dem ein Wert der Motorregelgröße von demjenigen Wert abweicht, welcher am gesetzten Umgehungs-Arbeitspunkt dem angefahrenen Wert der Motorsteuergröße zugeordnet ist, nicht ausgeführt.

Dies wird nachfolgend anhand eines Beispiels erläutert: wenn man z.B. weiß, dass Doppelungen der Arbeitspunkte z.B. bei 30m³/h und bei 60m³/h vorkommen, nicht jedoch, wenn die Volumenstromstärke um z.B. 2m³/h bei einem der Punkte abweicht, so kann dem Lüfter einprogrammiert werden, dass dann zur optionalen beschleunigten Regelung die Kennlinie mit Doppelungen nicht angefahren wird. So kann der Lüfter dann z.B. nicht mehr exakt 30m³/h anfahren, sondern "überspringt" diesen Wert und läuft statt dessen auf 32m³/h. Damit sind Doppelungen nicht notwendig und der Lüfter muss den das erfindungsgemäße in diesem Fall zur Validierung des Arbeitspunktes nicht ausführen. In einfachen Anwendungen sind oft nur 2-3 verschiedene Volumenströme notwendig. Hier können dann entsprechende Doppelungen vermieden werden. Es kann dann also auch ohne die erfindungsgemäße Validierung gearbeitet werden. Sind dann z.B. exakte Volumenströme nötig, also ist es nicht immer möglich Doppelungen auszuschließen, kann in der Steuerung hinterlegt werden, auf welchen Kennlinien bzw. bei welchen Volumenströmen überhaupt Doppelungen zu erwarten sind.

Bevorzugt wird zum Erfassen der Motorregelgröße des EC-Motors ein vom EC-Motor bereitgestelltes Positionssignal erfasst und aus mehreren an unterschiedlichen Zeitpunkten erfassten Positionssignalen eine von der Drehzahl des EC-Motors abhängige Größe bestimmt.

Zum Detektieren des Abweichungsfalls erfolgt vorzugsweise ein Vergleichen eines Wertepaares,
bestehend einerseits aus einem momentanen Wert der Leistungsaufnahme des EC-Motors, oder des Produkts der Steuerspannung des EC-Motors und der Drehzahl des EC-Motors, oder der Drehzahl des EC-Motors, und
bestehend andererseits aus einem momentanen Wert der erfassten Steuerspannung des EC-Motors,
mit einem anhand der Berechnungsvorschrift für den momentanen Wert der erfassten Steuerspannung des EC-Motors ermittelten Wertepaar. Bei fehlender Übereinstimmung des messtechnisch erfassten Wertepaares vom anhand der Berechnungsvorschrift erfassten Wertepaar liegt in diesem Ausführungsbeispiel ein Abweichungsfall vor.

Das Ermitteln des Hilfs-Arbeitspunktes umfasst in einer Ausführungsform ein Bestimmen eines Hilfs-Wertes der Motorsteuergröße, der größer ist als der Wert der Motorsteuergröße am zunächst eingestellten Arbeitspunkt. Auf diese Weise gelingt das Auffinden des neuen gesetzten Arbeitspunktes besonders schnell. Beispielsweise wird also die Steuerspannung wird erhöht, um über den aktuellen Arbeitspunkt oder aktuelle Kennlinie hinauszugehen.

Dieses Vorgehen ist insbesondere vorteilhaft, wenn der Arbeitspunkt auf der ersten Kennlinie, die dem Vorgabe-Wert der Soll-Volumenstromstärke zugeordnet ist, unter der (meist unzutreffenden) Annahme gesetzt wird, dass kein Gegendruck vorliegt, dass der Ventilator also ohne Widerstand frei blasen kann. Bei dieser Verfahrensführung wird anfangs also dem Vorgabe-Wert der Soll-Volumenstromstärke zugeordnete niedrigste Arbeitspunkt gesetzt. Es ist bei dieser Verfahrensführung also nur der Abweichungsfall möglich, dass der Arbeitspunkt, in dem der Lüfter wegen des tatsächlich vorhandenen Gegendrucks arbeiten muss, um den Vorgabe-Wert der Soll-Volumenstromstärke zu erzielen, höher als anfangs gesetzt liegt, weil ja nur ein höherer Gegendruck als angenommen vorliegen kann.

Grundsätzlich ist möglich, die Verfahrensführung unter einer anderen Annahme zu starten und einen beliebigen anderen Arbeitspunkt zu setzen, der den Vorgabe-Wert der Soll-Volumenstromstärke erfüllt. Solche alternativen Verfahrensführungen sind aber komplizierter und erzielen in der Praxis keine Vorteile.

Ein zweiter Aspekt der vorliegenden Erfindung betrifft eine Regelvorrichtung zum Regeln eines mit einem EC-Motor betriebenen Ventilators eines Lüftungsgeräts auf einen Arbeitspunkt, zum Erzielen und Halten einer vorgegebenen Soll-Volumenstromstärke des Lüftungsgeräts ohne Verwendung eines Drucksensors und ohne Verwendung eines Volumenstromsensors, umfassend
- eine Steuereinheit, die ausgebildet ist,
- einen Vorgabe-Wert der Soll-Volumenstromstärke zu empfangen und aus einem Feld von Arbeitspunkten für unterschiedliche Werte der Soll-Volumenstromstärke, die einen Differenzbetrag von mindestens 0,5 m³/h von einander aufweisen, einen Arbeitspunkt auf einer ersten Kennlinie zu ermitteln und zu setzen, der dem Vorgabe-Wert der Soll-Volumenstromstärke zugeordnet ist, und einen dem gesetzten Arbeitspunkt zugeordneten Wert der Motorsteuergröße anzufahren, wobei
- ein jeweiliger Arbeitspunkt für einen jeweils gegebenen Wert einer Motorsteuergröße des EC-Motors angibt, welcher Wert einer Motorregelgröße des EC-Motors einen jeweilige vom Ventilator zu erzeugenden Wert der Soll-Volumenstromstärke des Lüftungsgeräts erzielt,
- die Motorsteuergröße mit einer Leistungsaufnahme des EC-Motors und die Motorregelgröße mit einer Drehzahl des EC-Motors korreliert und wobei
- die bei unterschiedlichen Druckdifferenzen zwischen Eingang und Ausgang des Lüftungsgeräts einer jeweiligen Soll-Volumenstromstärke zugeordneten Arbeitspunkte in ihrer Gesamtheit als der Soll-Volumenstromstärke zugeordnete Kennlinie bezeichnet werden;
wobei die Steuereinheit zusätzlich ausgebildet ist,
- in Reaktion auf ein Vorliegen eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist, einen auf einer anderen Kennlinie liegenden temporären Hilfs-Arbeitspunkt aus dem Feld der Arbeitspunkte zu ermitteln und zu setzen, der einer von dem Vorgabe-Wert der Soll-Volumenstromstärke verschiedenen Hilfswert der Soll-Volumenstromstärke zugeordnet ist, und einen dem gesetzten Hilfs-Arbeitspunkt zugeordneten Hilfswert der Motorsteuergröße anzufahren;
- bei Detektieren eines Abweichungsfalls auch bezüglich des aktuell gesetzten Hilfs-Arbeitspunkts ausgehend vom aktuell gesetzten Hilfs-Arbeitspunkt das Ermitteln, Setzen, Anfahren und Erfassen iterativ auszuführen, bis nach dem Anfahren eines jeweils gesetzten neuen Hilfs-Wertes der Motorsteuergröße keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert ist;
- ausgehend vom verifizierten Hilfs-Arbeitspunkt einen hinsichtlich des momentanen Wertes der Motorsteuergröße nächstliegenden Arbeitspunkt auf der ersten Kennlinie als neuen gesetzten Arbeitspunkt zu ermitteln und einzustellen, sowie
- im Falle des Detektierens eines erneuten Abweichungsfalls bezüglich des neuen gesetzten Arbeitspunktes der Motorregelgröße zur Verfahrensführung ab dem Ermitteln und Setzen eines auf einer anderen Kennlinie liegenden Hilfs-Arbeitspunktes zurückzuverzweigen; und
- eine Überwachungseinheit, die ausgebildet ist,
- nach dem Anfahren des jeweils gesetzten Wertes oder Hilfs-Wertes der Motorsteuergröße regelmäßig wiederholt einen momentanen Wert der Motorregelgröße zu erfassen, zum Detektieren und gegebenenfalls Signalisieren des Abweichungsfalls.

Die Regelvorrichtung des zweiten Aspekts der Erfindung teilt die Vorteile des Verfahrens des ersten Aspekts der Erfindung.

Die Regelvorrichtung ist in mancher Ausführungsform als eigenständiges Bauteil getrennt vom zu regelnden EC-Motor ausgebildet und von diesem mechanisch wie elektrisch trennbar. Sie hat in diesen Ausführungsformen eine Schnittstelle zum Austausch von Zustands- und Steuerinformationen. Insbesondere empfängt die Überwachungseinheit über diese Schnittstelle regelmäßig wiederholt den momentanen Wert der Motorregelgröße. Die Steuereinheit ist ausgebildet, an der Schnittstelle nach Einschalten des Ventilators geeignete Steuersignale bereitzustellen, um einen auf der der Soll-Volumenstromstärke zugeordneten ersten Kennlinie mit der Soll-Volumenstromstärke verbundenen Arbeitspunkt einzustellen und in Reaktion auf eine Detektion eines vom gesetzten Arbeitspunkt abweichenden Werts der Motorregelgröße den auf einer anderen Kennlinie liegenden Hilfs-Arbeitspunkt aus dem Feld der Arbeitspunkte einzustellen, sowie ausgehend vom verifizierten Hilfs-Arbeitspunkt einen hinsichtlich des momentanen Wertes der Motorsteuergröße nächstliegenden Arbeitspunkt auf der ersten Kennlinie als neuen gesetzten Arbeitspunkt einzustellen. Auch der EC-Motor hat zum Betrieb mit solchen Ausführungsformen der Regelvorrichtungen vorzugsweise eine passende komplementäre Schnittstelle, um Steuerinformationen zu empfangen und Statusinformationen an die Regelvorrichtung bereitzustellen.

In anderen Ausführungsformen ist die Regelvorrichtung in den EC-Motor integriert.

Die Regelvorrichtung hat in weiteren Ausführungsformen eine Nutzerschnittstelle und ist ausgebildet, an der Nutzerschnittstelle einen Wert einer vorgegebenen Soll-Volumenstromstärke zu empfangen. Die Nutzerschnittstelle ist in unterschiedlichen Varianten ausgebildet, eine manuelle Eingabe (etwa über Tastatur oder ein graphisches Interface) oder eine maschinelle Eingabe (etwa von einem Prozessor über eine Signalschnittstelle) zu empfangen. Natürlich können auch beide genannten Eingabemöglichkeiten parallel vorgesehen sein.

In bevorzugten Ausführungsbeispielen der Regelvorrichtung ist die Steuereinheit ausgebildet, das Feld von Arbeitspunkten entweder teilweise oder vollständig in Form einer oder mehrerer Berechnungsvorschriften zur Darstellung einer jeweiligen mathematischen Funktion bereitzustellen, die eine Abhängigkeit der Leistungsaufnahme des EC-Motors, oder eine Abhängigkeit eines Produkts der Steuerspannung des EC-Motors und der Leistungsaufnahme des EC-Motors von der Steuerspannung des EC-Motors, oder eine Abhängigkeit der Drehzahl des EC-Motors von der Steuerspannung des EC-Motors abbildet oder abbilden.

Einen bevorzugten Anwendungsfall der Regelvorrichtung bildet eine Ventilator-Anordnung mit einem Ventilator, der eine Fördereinrichtung zum Erzeugen eines Gas-Volumenstroms und einen die Fördereinrichtung antreibenden EC-Motor aufweist, zusätzlich umfassend eine mit dem EC-Motor in Signalkommmunikation stehende Regelvorrichtung nach dem zweiten Aspekt der vorliegenden Erfindung oder einer ihrer hier beschriebenen Ausführungsformen.

Eine solche Ventilator-Anordnung kommt vorzugsweise in einem Lüftungsgerät zum Einsatz, insbesondere wo die Ventilator-Anordnung zwischen einem Einlass und einem Auslass des Lüftungsgeräts angeordnet ist, und bei der eine Leitvorrichtung zum Leiten des von der Ventilatorvorrichtung erzeugten Gas-Volumenstroms zwischen dem Einlass und dem Auslass vorhanden ist. Das Einsatzgebiet ist jedoch nicht solche Lüftungsgeräte beschränkt. Ventilatoren werden allgemein zum Lufttransport und nicht allein für Lüftungsanwendungen in Gebäuden eingesetzt. Daher eignet sich die Ventilator-Anordnung generell zum Einsatz in Lufttransport-Vorrichtungen, die von EC-Motoren Gebrauch machen.

Einen dritten hier nicht beanspruchten Aspekt der Erfindung bildet ein Verfahren zum automatisierten Bereitstellen eines Feldes von Arbeitspunkten eines mit einem EC-Motor betriebenen Ventilators eines Lüftungsgeräts, umfassend:
- für jede einer Vielzahl unterschiedlicher Werte einer Soll-Volumenstromstärke, wobei die unterschiedlichen Werte der Soll-Volumenstromstärke einen Differenzbetrag von mindestens 0,5 m³/h von einander aufweisen: Erfassen einer Drehzahl des EC-Motors, einer Steuerspannung des EC-Motors und einer Leistungsaufnahme des EC-Motors bei steigenden Werten eines gegen den Volumenstrom der jeweils vorgegebenen Soll-Volumenstromstärke gerichteten Gegendrucks, beginnend bei verschwindendem Gegendruck,
- wobei das Erfassen der genannten Größen unter schrittweise automatisch erhöhtem Gegendruck nur solange durchgeführt wird, wie der jeweils vorgegebene Wert der Soll-Volumenstromstärke erreicht wird.

Das Verfahren des dritten Aspekts der Erfindung ermöglicht die automatische Bestückung eines Ventilators mit einer Regelvorrichtung gemäß dem zweiten Aspekt der Erfindung mit der Kennlinieninformation zum Betrieb gemäß einem Verfahren des ersten Aspekts der Erfindung. Bevorzugt wird es an einem standardisierten und vollautomatischen Messplatz betrieben. Durch dieses Verfahren können Toleranzen aus z.B. Fertigung der mechanischen Bauteile oder elektronische Toleranzen berücksichtigt werden. So kann jeder Lüfter mit dieser Regeleinheit den exakt gleichen Volumenstrom ohne wesentliche Abweichungen durch Bauteiltoleranzen erzeugen.

In einer Ausführungsform wird zusätzlich anhand der Gesamtheit der für einen gegebenen Wert der Soll-Volumenstromstärke erfassten Werte von Drehzahl und Steuerspannung eine mathematische Funktion ermittelt, die eine Abhängigkeit der Leistungsaufnahme des EC-Motors, oder eine Abhängigkeit eines Produkts der Steuerspannung des EC-Motors und der Leistungsaufnahme des EC-Motors von der Steuerspannung des EC-Motors, oder eine Abhängigkeit der Drehzahl des EC-Motors von der Steuerspannung des EC-Motors abbildet, und bei dem das Feld von Arbeitspunkten in Form einer oder mehrerer Berechnungsvorschriften zur Darstellung einer jeweiligen mathematischen Funktion bereitgestellt wird.

In einer weiteren Ausführungsform wird das Verfahren zur Erzielung einer Leistungskompensation von Abweichungen erweitert, die durch individuelle bauliche Variationen aufgrund von Fertigungstoleranzen bedingt sind. Das Verfahren umfasst in dieser Ausführungsform:
- Durchführen des Verfahrens des dritten Aspekts der Erfindung für eine Vielzahl von EC-Motoren identischen Bautyps zur Bestimmung einer ersten Teilvorschrift der Berechnungsvorschrift, wobei die erste Teilvorschrift von einem jeweiligen individuellen EC-Motor unabhängig ist;
- Erfassen von Abweichungen der Abhängigkeit der Leistungsaufnahme des EC-Motors, oder der Abhängigkeit des Produkts der Steuerspannung des EC-Motors und der Leistungsaufnahme des EC-Motors von der Steuerspannung des EC-Motors, oder der Abhängigkeit der Drehzahl des EC-Motors von der Steuerspannung des EC-Motors von der ersten Teilvorschrift für einen, jeweiligen individuellen Ventilator;
- Ermitteln einer vom, jeweiligen individuellen EC-Motor abhängigen zweiten Teilvorschrift der Berechnungsvorschrift unter Verwendung der Abweichungen, wobei die zweite Teilvorschrift geeignet ist, die erfassten Abweichungen im Betrieb des EC-Motors zu kompensieren.

Einen vierten Aspekt der Erfindung bildet ein Computerprogramm-Produkt, enthaltend ausführbaren Programmcode zur Steuerung der Durchführung eines Verfahrens nach einem Verfahren des ersten Aspekts der Erfindung oder einem seiner Ausführungsbeispiele durch eine programmierbare Prozessorvorrichtung.

Nachfolgend werden anhand der beiliegenden Zeichnungen weitere Ausführungsbeispiele der Erfindung beschrieben. Es zeigen:
Fig. 1 zwei messtechnisch ermittelte Kennlinien eines mit einem EC-Motor betriebenen Ventilators eines Lüftungsgeräts;
Fig. 2 eine schematische Darstellung einer Kennlinien eines mit einem EC-Motor betriebenen Ventilators eines Lüftungsgeräts;
Fig. 3 ein Flussdiagramm eines Ausführungsbeispiels eines Verfahrens zum Regeln eines mit einem EC-Motor betriebenen Ventilators eines Lüftungsgeräts auf einen Arbeitspunkt;
Fig. 4 eine Darstellung von eines Feldes von Arbeitspunkten eines Lüftungsgeräts;
Fig. 5 eine schematische Darstellung eines Ausführungsbeispiels eines Verfahrens zum Regeln eines mit einem EC-Motor betriebenen Ventilators eines Lüftungsgeräts auf einen Arbeitspunkt anhand des Kennlinienfeldes aus Fig. 4;
Fig. 6 eine schematische Darstellung eines Ausführungsbeispiels eines Verfahrens zum Regeln eines mit einem EC-Motor betriebenen Ventilators eines Lüftungsgeräts auf einen Arbeitspunkt anhand einer alternativen Darstellung von Arbeitspunkten; und
Fig. 7 eine schematische Darstellung eines Ausführungsbeispiels eines Lüftungsgeräts mit einer Regelvorrichtung zum Regeln eines mit einem EC-Motor betriebenen Ventilators auf einen Arbeitspunkt.

Auf die Figuren 1 und 2 wurde einleitend bereits Bezug genommen.

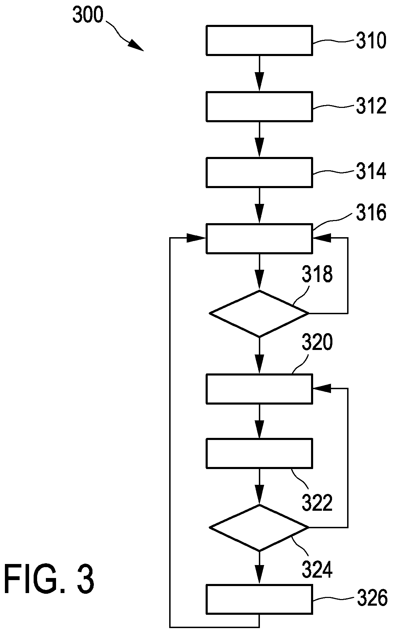

Fig. 3 zeigt ein Flussdiagramm eines Ausführungsbeispiels eines Verfahrens 300 zum Regeln eines mit einem EC-Motor betriebenen Ventilators eines Lüftungsgeräts auf einen Arbeitspunkt. In einem Schritt 310 wird ein Feld von Arbeitspunkten für unterschiedliche Werte der Soll-Volumenstromstärke bereitgestellt. Die unterschiedlichen Werte der Soll-Volumenstromstärke weisen einen Differenzbetrag von mindestens 0,5 m³/h auf. In vielen Anwendungen ist es im Hinblick auf die Genauigkeit der Regelung ausreichend, diesen Differenzbetrag mit mindestens 1 m³/h betragen zu lassen.

Einem jeweiligen Arbeitspunkt ist ein Wert einer Motorsteuergröße des EC-Motors und ein Wert einer Motorregelgröße des EC-Motors zugeordnet. Mit diesen Werten wird die dem Arbeitspunkt ebenfalls zugeordnete Soll-Volumenstromstärke des Lüftungsgeräts erzielt. Die Motorsteuergröße korreliert positiv mit einer Leistungsaufnahme des EC-Motors. Sie kann beispielsweise durch das Produkt von Steuerspannung und Stromstärke beim Betrieb des EC-Motors ermittelt werden. Eine in der Praxis vorteilhafte Alternative zur Darstellung der Motorsteuergröße ist das Produkt von Steuerspannung und Drehzahl des EC-Motors. Denn beide Kenngrößen sind beim Betrieb eines EC-Motors leicht ermittelbar, weil sie in der Regel vom EC-Motor selbst erfasst werden.

Bei dem Verfahren der Figur 3 wird in einem Schritt 312 ein Vorgabe-Wert der Soll-Volumenstromstärke empfangen. Der Vorgabe-Wert wird beispielsweise von einer RegelVorrichtung bereitgestellt. So kann etwa im Betrieb eines Lüftungsgeräts in einem Badezimmer bei Anschalten von Licht im Badezimmer oder bei Vorliegen eines eingerichteten anderen Auslösesignals ein vorbestimmter Vorgabe-Wert der Soll-Volumenstromstärke abgerufen und für die Durchführung des Verfahrens eingespeist werden.

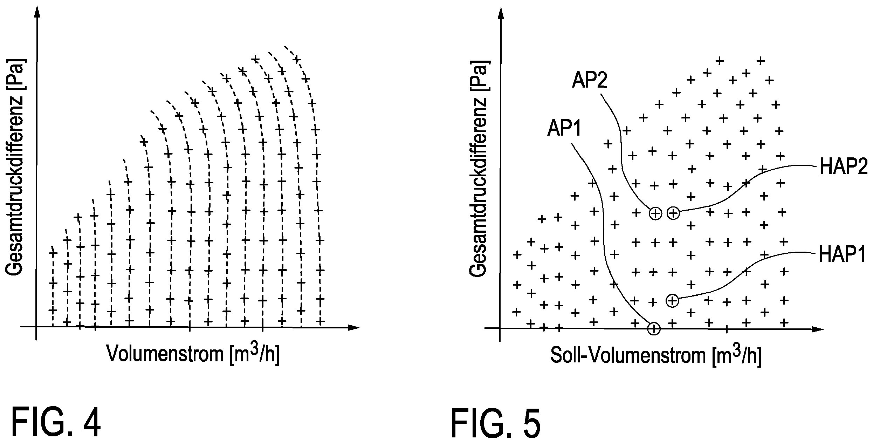

Nachfolgend wird parallel auf Figur 4 Bezug genommen. Figur 4 zeigt eine Darstellung eines Feldes von Arbeitspunkten eines Lüftungsgeräts. Die Arbeitspunkte sind im Diagramm der Figur vier mit Kreuzen gekennzeichnet. Jeder Arbeitspunkt ist einem Wert des Soll-Volumenstroms und einem Wert der Gesamtdruckdifferenz zugeordnet. Durch gestrichelte Linien verbundene Arbeitspunkte sind demselben Wert der Soll-Volumenstromstärke zugeordnet und gehören daher zu derselben Kennlinie. Mit anderen Worten stellen die gestrichelten Linien selbst jeweils Kennlinien dar. Kennlinien werden in einem gesonderten Verfahren vor Inbetriebnahme des Lüftungsgeräts an einem Prüfstand ermittelt und aufgezeichnet. Von daher ist grundsätzlich bekannt, bei welchem Gegendruck mit gegebener Leistungsaufnahme und Drehzahl des Lüftungsgeräts welcher Volumenstrom erzeugt wird. Die Zuordnung der Arbeitspunkte zu den Kennlinien ist also bekannt.

Den Arbeitspunkten im Kennlinienfeld ist jeweils ein zugehöriges Wertepaar der Motorsteuergröße und der Motorregelgröße hinterlegt, was in der Darstellung der Figur 4 nicht unmittelbar erkennbar ist. Eine Kennlinie gehört zu einer bestimmten Volumenstromstärke im freiblasenden Zustand, also ohne Gegendruck (Gesamtdruckdifferenz). Dieser Wert der Volumenstromstärke ist also im Diagramm der Figur vier jeweils bei verschwindender Gesamtdruckdifferenz erreicht. Wird der Gegendruck verändert, so ändert sich die Volumenstromstärke, oder es wird die Leistungsaufnahme oder die Steuerspannung, mit anderen Worten die Motorsteuergröße verändert, um die gewünschte Volumenstromstärke gegenüber dem freiblasenden Fall unverändert beizubehalten. Arbeitspunkte sind also Kennlinien zugeordnet. Aufgrund des gewählten Abstands der unterschiedlichen Soll-Volumenstromstärken von einander entsteht ein Feld von eindeutig definierten Arbeitspunkten. So kann man ermitteln, ob ein Arbeitspunkt einer bestimmten Kennlinie zugeordnet werden kann oder ob er sich auf einer anderen Kennlinie befindet. Dies ist eine wichtige Information zur Orientierung im Regelprozess.

In einem Schritt 314 wird nun aus einem solchen Feld von Arbeitspunkten ein geeigneter Arbeitspunkt ermittelt, welcher auf einer ersten Kennlinie liegt, die dem Vorgabewert der Soll-Volumenstromstärke zugeordnet ist. Konkret wird im vorliegenden Beispiel ein Arbeitspunkt ermittelt, der dem freiblasenden Vorgabe-Wert der Volumenstromstärke entspricht, beispielsweise einem Vorgabe-Wert von 60m³/h. Der Arbeitspunkt ist wie alle anderen Arbeitspunkte im bereitgestellten Feld von Arbeitspunkten so in der Steuerung hinterlegt, dass er entsprechend abgerufen werden kann.

Der Lüfter fährt dann, ebenfalls im Schritt 314, genau den ermittelten Arbeitspunkt an, der dem freiblasenden Vorgabe-Wert der Volumenstromstärke entspricht. Dazu wird die Steuerspannung eingestellt, die beispielsweise durch einen digitalen Wert bestimmt wird. Wichtig hierbei ist, dass die Steuerspannung oder ihr digitaler Entsprechungswert zu einer bestimmten Drehzahl führen soll. Diese bestimmte Drehzahl wird aber nur unter definierten Umständen, also bei einem bestimmten Gegendruck erreicht. Sobald sich der Gegendruck ändert, erreicht der Lüfter mit dem gewählten Steuerpunkt nicht die Drehzahl oder Leistungsaufnahme. Diese Differenz nutzen wir später für unsere Auswertungen.

Nach einer gewissen Zeit wird in einem Schritt 316 der Ist-Zustand des Lüfters abgefragt. Es wird also die Drehzahl oder die Leistungsaufnahme gemessen. Dieser Schritt des Erfassens eines momentanen Wertes der Motorregelgröße wird nach dem Anfahren des Wertes der Motorsteuergröße zum Detektieren eines Abweichungsfalls regelmäßig wiederholt.

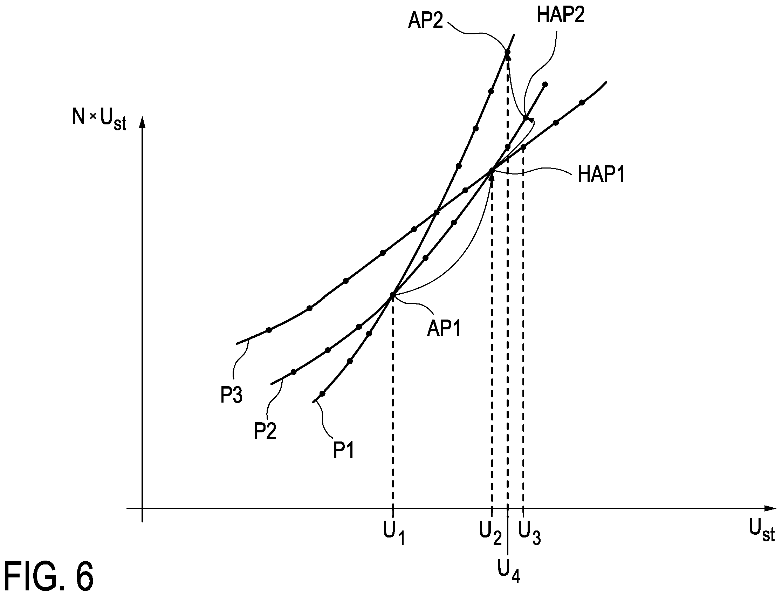

Anschließend wird anhand des erfassten Wertes der Motorregelgröße in einem Schritt 318 ermittelt, ob ein Abweichungsfall vorliegt. Für das Ermitteln des Abweichungsfalls im Schritt 318 ist es hilfreich, wenn das Feld von Arbeitspunkten entweder teilweise oder vollständig in Form einer oder mehrerer Berechnungsvorschriften zur Darstellung einer jeweiligen mathematischen Funktion bereitgestellt wird, die eine Abhängigkeit der Leistungsaufnahme des EC-Motors, oder eine Abhängigkeit eines Produkts der Steuerspannung des EC-Motors und der Drehzahl des EC-Motors, oder eine Abhängigkeit der Drehzahl des EC-Motors, jeweils von der Steuerspannung des EC-Motors abbildet oder abbilden. Hierzu wird ergänzend und parallel auf die Figuren 5 und 6 verwiesen. Fig. 5 zeigt eine schematische Darstellung eines Ausführungsbeispiels eines Verfahrens zum Regeln eines mit einem EC-Motor betriebenen Ventilators eines Lüftungsgeräts auf einen Arbeitspunkt anhand des Kennlinienfeldes aus Fig. 4. Fig. 6 zeigt eine schematische Darstellung eines Ausführungsbeispiels eines Verfahrens zum Regeln eines mit einem EC-Motor betriebenen Ventilators eines Lüftungsgeräts auf einen Arbeitspunkt anhand einer alternativen Darstellung von Arbeitspunkten, welche die erwähnte Berechnungsvorschrift visualisiert.

Im vorliegenden Fall ist die Berechnungsvorschrift eine Formel, welche ein vor Inbetriebnahme des Lüftungsgeräts bestimmtes Polynom darstellt. Das Polynom wird durch Messungen an einem Prüfstand und Fitten der gemessenen Werte bestimmt. Beispielsweise kann ein Polynom 3. oder 4. Grades benutzt werden, um den Rechenaufwand während des Regelverfahrens bei hinreichender Genauigkeit gering zu halten. Mithilfe des Polynoms wird für einen festen Wert der Volumenstromstärke ein gegebener Zusammenhang des Produkts der Drehzahl N des EC-Motors und der Steuerspannung Uₛₜ einerseits und der Steuerspannung Uₛₜ des Lüfters andererseits mathematisch dargestellt. In Figur 6 sind solche Zusammenhänge beispielhaft anhand dreier Kurven P1, P2 und P3 dargestellt, die drei verschiedenen Polynomen entsprechen und somit drei unterschiedlichen Volumenstromstärken. Punkte, die auf den Kurven P1 bis P3 eingezeichnet sind, entsprechen Arbeitspunkten aus dem Feld der Arbeitspunkte, welches vorab bereitgestellt worden ist. Als Beispiele sind Arbeitspunkte AP1, AP2 auf der Kurve P1 gekennzeichnet. Weiterhin sind auf den Kurven P2 und P3 Hilfs-Arbeitspunkte HAP1 und HAP2 gekennzeichnet, die im Laufe der Verfahrensführung angesteuert werden. Die Kurven müssen sich nicht schneiden, wie es in Fig. 6 als allgemeinster Fall dargestellt ist. Die Erfinder haben sich nicht schneidende Polynomverläufe ermittelt.

Es wird nun im Schritt 318 ermittelt, ob ein Produkt der im Schritt 316 erfassten Drehzahl und des ebenfalls erfassten Wertes der Steuerspannung in Übereinstimmung mit demjenigen Wert steht, welcher mit demjenigen Polynom, welches für den Vorgabe-Wert der Volumenstromstärke angegeben ist, mit dem erfassten Wert der Steuerspannung zu berechnen ist. Ist dies der Fall, liegt kein Abweichungsfall vor. Das Verfahren wird in diesem Fall mit der Überwachung der Einhaltung des Arbeitspunktes durch Zurückverzweigen zum Schritt 316 fortgesetzt, bis sich ein Abweichungsfall ergibt.

Passen das ermittelte Produkt und das für den vorgegebenen Wert der Soll-Volumenstärke bereitgestellte Polynom jedoch nicht, so liegt ein Abweichungsfall vor. In diesem Fall wird zum Schritt 320 verzweigt. Im Schritt 320 erfolgt ein Ermitteln und Setzen eines temporären Hilfs-Arbeitspunktes HAP1 aus dem Feld der Arbeitspunkte, der einem Hilfswert der Soll-Volumenstromstärke zugeordnet ist. Der Hilfswert der Soll-Volumenstromstärke kann von dem Vorgabe-Wert der Soll-Volumenstromstärke verschieden sein. Er kann jedoch auch gleich dem Vorgabe-Wert der Soll-Volumenstromstärke sein und somit auf derselben Kennlinie liegen wie der Vorgabe-Wert. Der Hilfs-Arbeitspunkt HAP1 wird beispielsweise so ausgewählt, dass die Drehzahl des EC-Motors gegenüber dem zuvor erfassten Wert der Drehzahl erhöht wird. Beispielsweise wird der Hilfs-Arbeitspunkt ein Arbeitspunkt ausgewählt, dass eine nächst höhere Drehzahl im Vergleich mit der aktuell im Schritt 316 erfassten Drehzahl erzielt wird. Es könnten jedoch, wie auch in Fig. 6 dargestellt, auch andere Schrittgrößen bei der Regelung gewählt werden. Je nach Vorzeichen der Abweichung zwischen dem berechnetem Produkt und dem Vergleichswert des Polynoms kann selbstverständlich auch eine Verringerung der Drehzahl vorgenommen werden. Startet man jedoch das Regelverfahren unter der Annahme von freiblasenden Bedingungen, so wird im Normalfall eine Erhöhung der Drehzahl erforderlich sein, um den Lüfter im Abweichungsfall dem Vorgabe-Wert der Soll-Volumenstromstärke anzunähern. Anschließend wird noch im selben Schritt 320 der fest gelegte Hilfs-Arbeitspunkt angefahren. Dafür wird ein dem gesetzten Hilfs-Arbeitspunkt zugeordneter Hilfswert der Motorsteuergröße, also der Steuerspannung eingestellt.

Im Schritt 322 erfolgt dann wiederum ein Erfassen des momentanen Wertes der Motorregelgröße. Im Schritt 324 wird in analoger Weise wie im Schritt 318 geprüft, ob der Hilfs-Arbeitspunkt HAP1 tatsächlich angefahren wurde. Dies erfolgt wie oben erläutert dadurch, dass geprüft wird, ob das ermittelte Wertepaar von Drehzahl und Steuerspannung zu demjenigen Polynom der Kurve P3 passen, welches dem Wert der Volumenstromstärke am Hilfs-Arbeitspunkt zugeordnet ist. Ist dies nicht der Fall, liegt erneut ein Abweichungsfall vor und wird zum Schritt 320 zurück verzweigt, um einen nächsten Hilfsarbeitspunkt HAP2 zu ermitteln und anzufahren. Es ist sinnvoll, vor dem Erfassen der aktuellen Werte eine Weile zur Stabilisierung der Werte abzuwarten. Es kann beispielsweise passieren, dass Drücke in Rohrleitungen etwas schwanken, da Luft kompressibel ist und sich der neue Druck erst in der Rohrleitung verteilen muss. 5 bis 10 Sekunden Wartezeit sind in der Praxis ausreichend.

Das beschriebene Vorgehen des Ermittelns und Anfahrens eines jeweiligen Hilfs-Arbeitspunktes wird iterativ so lange betrieben, bis ein Hilfs-Arbeitspunkt gefunden ist, an dem die dann erfassten Werte von Steuerspannung und Motor-Drehzahl eine Übereinstimmung mit dem am betreffenden Hilfs-Arbeitspunkt gültigen Polynom erzielen. Erst dann ist ermittelt, an welchem Arbeitspunkt sich der Lüfter tatsächlich befindet. Mit anderen Worten kann erst an dieser Stelle genau angegeben werden, welche Gesamtdruckdifferenz und welcher Volumenstrom tatsächlich vorliegen, wo also im Kennlinienfeld der Figur 4 sich der Lüfter im aktuellen Betriebszustand genau befindet. Diese Ermittlung ist wie aus der vorstehenden Erläuterung ersichtlich ohne direkte Messung der Gesamtdruckdifferenz und ohne direkte Messung des Volumenstroms erfolgt, sondern allein anhand von Betriebsgrößen des EC-Motors, nämlich im vorliegenden Beispiel anhand der Drehzahl und der Steuerspannung. Wie erläutert kann anhand der Drehzahl auch die Leistungsaufnahme des EC-Motors zur Ermittlung des tatsächlichen Arbeitspunkt verwendet werden. Hierfür wäre jedoch ein Stromflusssensors erforderlich, was den apparativen Aufwand gegenüber einer Verwendung der Drehzahl erhöht.

In einer Variante (nicht in Fig. 3 dargestellt) wird, um zu 100% sicher zu gehen, dass auch tatsächlich der ermittelte Arbeitspunkt im Kennlinienfeld erreicht wurde, zusätzlich der nächsthöhere Punkt auf derselben Kennlinie (also der nächste Arbeitspunkt) angefahren und die Werte des Polynoms ebenfalls verglichen. Erst wenn auch diese Werte auch passen, wird der Lüfter auf den Arbeitspunkt, der dem Vorgabe-Wert der Soll-Volumenstromstärke entspricht. In diesem Fall werden also zwei benachbarte Arbeitspunkte abgeglichen, um eine höhere Sicherheit zu erreichen, dass der Lüfter auch tatsächlich im korrekten Bereich arbeitet.

Von dem verifizierten Hilfs-Arbeitspunkt aus wird anschließend im Schritt 326 ermittelt, welcher Arbeitspunkt AP2 nun vorzugeben ist, um den Vorgabe-Wert der Soll-Volumenstromstärke zu erzielen. Ausgehend vom verifizierten Hilfs-Arbeitspunkt HAP2 ist der nächste Arbeitspunkt zwangsläufig auf einer anderen Lüfterkennlinie, da durch Erhöhen der Lüfterleistung die Volumenstromstärke des Lüfters verändert wird. Es muss also beim Regeln zwischen unterschiedlichen Kennlinien gesprungen werden können. Daher Ist es sinnvoll, für unterschiedliche Werte der Soll-Volumenstromstärke Polynome bereitzustellen.

Der durch das Polynom dargestellte Zusammenhang ist zuvor in einem Prüfstand zu ermitteln. Es liegt also ein eindeutiger Zusammenhang vor, wenn man die jeweiligen Kennwerte (Produkt aus Drehzahl und Steuerspannung) der hierbei angefahrenen Arbeitspunkte aufnimmt und beide Werte jeweils Punkten auf der jeweiligen Kennlinie zuordnet. Es muss also der Lüfter in seiner Bauform vorhanden und vermessen sein, um sein Regelverhalten zu kennen und die unterschiedlichen Arbeitspunkte bestimmen zu können. Es hat sich herausgestellt, dass Abstände von etwa 5-10 Pa Druckunterschied (Gegendruck) für die Aufnahme der Arbeitspunkte sinnvoll ist. So ist ein recht großer Abstand der einzelnen Arbeitspunkte vorhanden, die Regelbarkeit der Kennlinie ist aber noch gut genug. So kann auch eine nahezu senkrechte Kennlinie erzeugt werden, in welcher der Volumenstrom nahezu 100% konstant bleibt. Als maximale Werte sind normative Randbedingungen zu sehen. So ist z.B. in der DIN 18017-3 geregelt, dass der Volumenstrom eines Lüfters maximal 10% von seinem freiblasenden Volumenstrom variieren darf, ohne dass der Einsatz des Lüfters limitiert wird. Ausgehend von einem freiblasenden Volumenstrom von 60m³/h, darf der minimale Volumenstrom 54m³/h nicht unterschreiten. Und dies unter Einhaltung aller Toleranzen. Es kann also mit Hilfe eines Prüfstandes ermittelt werden, wie groß die Toleranzen in der Kennlinie sind, bis die maximale Abweichung der Kennlinie im Bezug zum Volumenstrom erreicht ist. So kann dann der maximale Abstand der Arbeitspunkte ermittelt werden, da die Kennlinie sich ja auch der Verbindung der einzelnen Arbeitspunkte untereinander ergibt und die Toleranzen nicht überschritten werden dürfen. In diesem Sinne sind die genannten 5-10 Pa als Druckdifferenzabstand bevorzugt.

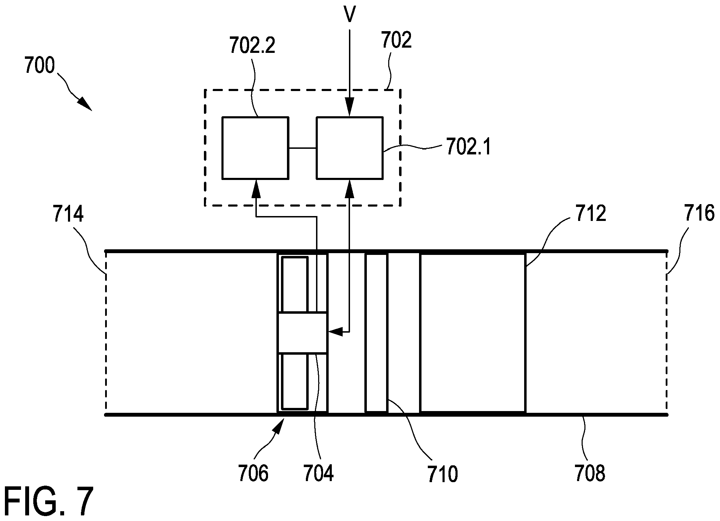

Fig. 7 zeigt eine schematische Darstellung eines Ausführungsbeispiels eines Lüftungsgeräts 700 mit einer Regelvorrichtung 702 zum Regeln eines mit einem EC-Motor betriebenen Ventilators 706 auf einen Arbeitspunkt. Das Lüftungsgerät weist zusätzlich in einem rohrförmigen Profil 708 einen dem Ventilator nachgeschalteten Strömungsvergleichmäßiger 710 und einen Wärmetauscher 712 auf. Strömungsvergleichmäßiger 710 und Wärmetauscher 712 sind selbstverständlich keine im Hinblick auf das in der vorliegenden Anmeldung beschriebene Regelverfahren notwendigen Komponenten und können auch fortgelassen werden. Sie bilden jedoch Beispiele von Komponenten, welche den Gegendruck beeinflussen. Hierzu gehören auch ein Einlass 714 und ein Auslass 716, wobei Einlass und Auslass je nach eingestellter Strömungsrichtung die Rollen tauschen können. Die Regelvorrichtung 702 ist mit dem EC Motor 704 verbunden. In einer bevorzugten Ausführungsform ist die Regelvorrichtung 702 in den EC-Motor baulich integriert. In einer alternativen Ausführungsform ist sie mit dem EC-Motor als Modul verbindbar. Die Regelvorrichtung ist in einer weiteren Ausführungsform als Computerprogramm in einem Arbeitsspeicher eines Prozessors implementiert, der entweder in den EC-Motor integriert ist oder mit diesem als Modul verbunden werden kann.

Die Regelvorrichtung weist eine Steuereinheit 702.1 auf. Die Steuereinheit 702.1 ist ausgebildet, einen Vorgabe-Wert V der Soll-Volumenstromstärke zu empfangen und aus einem Feld von Arbeitspunkten für unterschiedliche Werte der Soll-Volumenstromstärke, die einen Differenzbetrag von mindestens 0,5 m³/h von einander aufweisen, einen Arbeitspunkt auf einer ersten Kennlinie zu ermitteln und zu setzen, der dem Vorgabe-Wert V der Soll-Volumenstromstärke zugeordnet ist, und einen dem gesetzten Arbeitspunkt zugeordneten Wert der Motorsteuergröße anzufahren.

Wie bereits erläutert, gibt ein jeweiliger Arbeitspunkt für einen jeweils gegebenen Wert einer Motorsteuergröße des EC-Motors an, welcher Wert einer Motorregelgröße des EC-Motors einen jeweilige vom Ventilator zu erzeugenden Wert der Soll-Volumenstromstärke des Lüftungsgeräts erzielt, wobei die Motorsteuergröße mit einer Leistungsaufnahme des EC-Motors und die Motorregelgröße mit einer Drehzahl des EC-Motors positiv korreliert.

Die Steuereinheit 702.1 ist zusätzlich ausgebildet, in Reaktion auf ein Vorliegen eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist, einen auf einer anderen Kennlinie liegenden temporären Hilfs-Arbeitspunkt aus dem Feld der Arbeitspunkte zu ermitteln und zu setzen, der einer von dem Vorgabe-Wert der Soll-Volumenstromstärke verschiedenen Hilfswert der Soll-Volumenstromstärke zugeordnet ist, und einen dem gesetzten Hilfs-Arbeitspunkt zugeordneten Hilfswert der Motorsteuergröße anzufahren. Bei Detektieren eines Abweichungsfalls auch bezüglich des aktuell gesetzten Hilfs-Arbeitspunkts ausgehend vom aktuell gesetzten Hilfs-Arbeitspunkt bewirkt die Steuereinheit 702.1 eine iterative Ausführung des Ermittelns, Setzens, Anfahrens und Erfassens, bis nach dem Anfahren eines jeweils gesetzten neuen Hilfs-Wertes der Motorsteuergröße keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert ist.

Ausgehend vom verifizierten Hilfs-Arbeitspunkt bewirkt die Steuereinheit 702.1 das Ermitteln und Anfahren eines hinsichtlich des momentanen Wertes der Motorsteuergröße (insbesondere, jedoch nicht notwendigerweise nächstliegenden) Arbeitspunktes auf der ersten Kennlinie als neuen gesetzten Arbeitspunkt.

Im Falle des Detektierens eines erneuten Abweichungsfalls bezüglich des neuen gesetzten Arbeitspunktes der Motorregelgröße wird zur Verfahrensführung ab dem Ermitteln und Setzen eines auf einer anderen Kennlinie liegenden Hilfs-Arbeitspunktes zurückverzweigt.

Eine Überwachungseinheit 702.2 ist ausgebildet ist, nach dem Anfahren des jeweils gesetzten Wertes oder Hilfs-Wertes der Motorsteuergröße regelmäßig wiederholt einen momentanen Wert der Motorregelgröße zu erfassen, zum Detektieren und gegebenenfalls Signalisieren des Abweichungsfalls.

Zusammenfassend werden Verfahren und Vorrichtungen zum Regeln eines mit einem EC-Motor betriebenen Ventilators eines Lüftungsgeräts auf einen Arbeitspunkt vorgeschlagen, zum Erzielen und Halten einer vorgegebenen Soll-Volumenstromstärke des Lüftungsgeräts ohne Verwendung eines Drucksensors und ohne Verwendung eines Volumenstromsensors. Es wird ein Arbeitspunkt auf einer ersten Kennlinie gesetzt, die einem Vorgabe-Wert der Soll-Volumenstromstärke zugeordnet ist. Bei Detektieren eines Abweichungsfalls, in dem ein Wert einer Motorregelgröße von demjenigen Wert abweicht, welcher am gesetzten Arbeitspunkt dem angefahrenen Wert der Motorsteuergröße zugeordnet ist, wird ein temporärer Hilfs-Arbeitspunktes aus einem bereitgestellten Feld von Arbeitspunkte angefahren. Das wird iterativ ausgeführt wird, bis keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert. Dann wird ein Arbeitspunkt angefahren, der der gewünschten Soll-Volumenstromstärke entspricht.

## Patentansprüche

1. Verfahren (300) zum Regeln eines mit einem EC-Motor (704) betriebenen Ventilators (706) eines Lüftungsgeräts (700) auf einen Arbeitspunkt, zum Erzielen und Halten einer vorgegebenen Soll-Volumenstromstärke des Lüftungsgeräts (700) ohne Verwendung eines Drucksensors und ohne Verwendung eines Volumenstromsensors, umfassend
- Bereitstellen eines Feldes von Arbeitspunkten für unterschiedliche Werte der Soll-Volumenstromstärke (310), wobei
- die unterschiedlichen Werte der Soll-Volumenstromstärke einen Differenzbetrag von mindestens 0,5 m³/h von einander aufweisen,
- ein jeweiliger Arbeitspunkt für einen jeweils gegebenen Wert einer Motorsteuergröße des EC-Motors (704) angibt, welcher Wert einer Motorregelgröße des EC-Motors (704) eine jeweilige vom Ventilator (706) zu erzeugende Soll-Volumenstromstärke des Lüftungsgeräts (700) erzielt,
- die Motorsteuergröße mit einer Leistungsaufnahme des EC-Motors (704) und die Motorregelgröße mit einer Drehzahl des EC-Motors (704) positiv korreliert und wobei
- die bei unterschiedlichen Druckdifferenzen zwischen Eingang und Ausgang des Lüftungsgeräts (700) einer jeweiligen Soll-Volumenstromstärke zugeordneten Arbeitspunkte in ihrer Gesamtheit nachfolgend als der Soll-Volumenstromstärke zugeordnete Kennlinie bezeichnet werden;
- Empfangen eines Vorgabe-Wertes der Soll-Volumenstromstärke (312);
- Ermitteln und Setzen eines Arbeitspunktes auf einer ersten Kennlinie, die dem Vorgabe-Wert der Soll-Volumenstromstärke zugeordnet ist, und Anfahren des dem gesetzten Arbeitspunkt zugeordneten Wertes der Motorsteuergröße (314);
- Regelmäßig wiederholtes Erfassen eines momentanen Wertes der Motorregelgröße nach dem Anfahren des Wertes der Motorsteuergröße (316) zum Detektieren eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist (318);
- in Reaktion auf ein Vorliegen des Abweichungsfalls: Ermitteln und Setzen eines temporären Hilfs-Arbeitspunktes aus dem Feld der Arbeitspunkte, der einem Hilfswert der Soll-Volumenstromstärke zugeordnet ist, und wobei bei Detektieren eines Abweichungsfalls auch bezüglich des aktuell gesetzten Hilfs-Arbeitspunkts ausgehend vom aktuell gesetzten Hilfs-Arbeitspunkt das Ermitteln, Setzen, Anfahren und Erfassen iterativ ausgeführt wird (320, 322), bis nach dem Anfahren eines jeweils gesetzten neuen Hilfs-Wertes der Motorsteuergröße keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert ist (324);
- ausgehend vom verifizierten Hilfs-Arbeitspunkt: Ermitteln und Anfahren eines Arbeitspunktes, insbesondere eines hinsichtlich des momentanen Wertes der Motorsteuergröße nächstliegenden Arbeitspunktes auf der ersten Kennlinie als neuer gesetzter Arbeitspunkt (326), sowie
- im Falle des Detektierens eines erneuten Abweichungsfalls bezüglich des neuen gesetzten Arbeitspunktes der Motorregelgröße: Wiederholen der beschriebenen Verfahrensführung ab dem Ermitteln und Setzen eines auf einer anderen Kennlinie liegenden Hilfs-Arbeitspunktes.

2. Verfahren nach Anspruch 1, bei dem bei der Bestimmung des nächstliegenden Arbeitspunktes als Abstandsmaß zwischen zwei Arbeitspunkten eine Differenz von Beträgen der Motorsteuergröße oder der Motorregelgröße oder eines Produktes der Motorsteuergröße mit der Motorregelgröße an den betreffenden Arbeitspunkten verwendet wird.

3. Verfahren nach Anspruch 1 oder 2, bei dem
- das Feld von Arbeitspunkten entweder teilweise oder vollständig in Form einer oder mehrerer Berechnungsvorschriften zur Darstellung einer jeweiligen mathematischen Funktion bereitgestellt wird, die eine Abhängigkeit der Leistungsaufnahme des EC-Motors (704), oder eine Abhängigkeit eines Produkts der Steuerspannung des EC-Motors (704) und der Drehzahl des EC-Motors (704), oder eine Abhängigkeit der Drehzahl des EC-Motors (704), jeweils von der Steuerspannung des EC-Motors (704) abbildet oder abbilden.

4. Verfahren nach Anspruch 3, bei dem der mindestens einen Berechnungsvorschrift umkehrbar eindeutig ein Wert der Volumenstromstärke zugeordnet ist; insbesondere zusätzlich umfassend zum Detektieren des Abweichungsfalls:
- Vergleichen eines Wertepaares,
bestehend einerseits aus einem momentanen Wert der Leistungsaufnahme des EC-Motors (704), oder des Produkts der Steuerspannung des EC-Motors (704) und der Drehzahl des EC-Motors (704), oder der Drehzahl des EC-Motors (704),
bestehend andererseits aus einem momentanen Wert der erfassten Steuerspannung des EC-Motors (704),
mit einem anhand der Berechnungsvorschrift für den momentanen Wert der erfassten Steuerspannung des EC-Motors (704) ermittelten Wertepaar.

5. Verfahren nach Anspruch 3 oder 4, umfassend
- Bereitstellen einer ersten Berechnungsvorschrift, welche einen ersten Satz Arbeitspunkte darstellt, die alle einer vorbestimmten Maximal-Soll-Volumenstromstärke zugeordnet sind,
- Bereitstellen einer zweiten Berechnungsvorschrift, welche einen zweiten Satz Arbeitspunkte darstellt, die alle einer vorbestimmten Minimal-Soll-Volumenstromstärke zugeordnet sind, und
- Ermitteln des zu setzenden Arbeitspunktes oder des auf einer anderen Kennlinie liegenden temporären Hilfs-Arbeitspunktes durch Interpolieren unter Verwendung der ersten und zweiten Berechnungsvorschrift und eines Unterschieds zwischen der zu setzenden Soll- oder Hilfs-Volumenstromstärke und der Minimal- sowie der Maximal-Sollvolumenstromstärke.

6. Verfahren nach mindestens einem der Ansprüche 3 bis 5, bei dem die Berechnungsvorschrift eine Auswertung eines Polynoms mindestens dritten Grades beinhaltet.

7. Verfahren nach mindestens einem der Ansprüche 3 bis 6, bei dem die Berechnungsvorschrift eine vom jeweiligen individuellen Ventilator (706) unabhängige erste Teilvorschrift und eine vom jeweiligen Ventilator (706) abhängige zweite Teilvorschrift umfasst.

8. Verfahren nach mindestens einem der Ansprüche 3 bis 7, zusätzlich umfassend vor dem Setzen eines Arbeitspunktes:
- Prüfen anhand der mindestens einen Berechnungsvorschrift für unterschiedliche Soll-Volumenstärken, ob ein jeweiliger ermittelter Arbeitspunkt zwei oder mehr Soll-Volumenstromstärken des Lüftungsgeräts (700) zugeordnet ist,
- falls ja: Prüfen, ob ein vorbestimmtes Kriterium zur Durchführung einer beschleunigten Verfahrensführung unter Umgehung der beschriebenen Verfahrensführung ab dem Setzen des Arbeitspunktes vorliegt;
- falls das vorbestimmte Kriterium vorliegt: Ermitteln und Setzen eines Umgehungs-Arbeitspunktes unter Verwendung der Berechnungsvorschrift, wobei der Umgehungs-Arbeitspunkt einer einzigen Volumenstromstärke im Abstand von mindestens 0,5 m³/h und maximal 10 % vom Vorgabe-Wert der Soll-Volumenstromstärke zugeordnet ist; und
- anschließendes Anfahren des dem gesetzten Umgehungs-Arbeitspunkt zugeordneten Wertes der Motorsteuergröße.

9. Verfahren nach mindestens einem der vorstehenden Ansprüche, bei dem zum Erfassen der Motorregelgröße des EC-Motors (704) ein vom EC-Motor (704) bereitgestelltes Positionssignal erfasst wird und aus mehreren an unterschiedlichen Zeitpunkten erfassten Positionssignalen eine von der Drehzahl des EC-Motors (704) abhängige Größe bestimmt wird.

10. Regelvorrichtung (702) zum Regeln eines mit einem EC-Motor (704) betriebenen Ventilators (706) eines Lüftungsgeräts (700) auf einen Arbeitspunkt, zum Erzielen und Halten einer vorgegebenen Soll-Volumenstromstärke des Lüftungsgeräts (700) ohne Verwendung eines Drucksensors und ohne Verwendung eines Volumenstromsensors, umfassend
- eine Steuereinheit (702.1), die ausgebildet ist,
- einen Vorgabe-Wert der Soll-Volumenstromstärke zu empfangen und aus einem Feld von Arbeitspunkten für unterschiedliche Werte der Soll-Volumenstromstärke, die einen Differenzbetrag von mindestens 0,5 m³/h von einander aufweisen, einen Arbeitspunkt auf einer ersten Kennlinie zu ermitteln und zu setzen, der dem Vorgabe-Wert der Soll-Volumenstromstärke zugeordnet ist, und einen dem gesetzten Arbeitspunkt zugeordneten Wert der Motorsteuergröße anzufahren, wobei
- ein jeweiliger Arbeitspunkt für einen jeweils gegebenen Wert einer Motorsteuergröße des EC-Motors (704) angibt, welcher Wert einer Motorregelgröße des EC-Motors (704) einen jeweilige vom Ventilator (706) zu erzeugenden Wert der Soll-Volumenstromstärke des Lüftungsgeräts (700) erzielt,
- die Motorsteuergröße mit einer Leistungsaufnahme des EC-Motors (704) und die Motorregelgröße mit einer Drehzahl des EC-Motors (704) positiv korreliert und wobei
- die bei unterschiedlichen Druckdifferenzen zwischen Eingang und Ausgang des Lüftungsgeräts (700) einer jeweiligen Soll-Volumenstromstärke zugeordneten Arbeitspunkte in ihrer Gesamtheit als der Soll-Volumenstromstärke zugeordnete Kennlinie bezeichnet werden;
wobei die Steuereinheit (702.1) zusätzlich ausgebildet ist,
- in Reaktion auf ein Vorliegen eines Abweichungsfalls, in dem ein Wert der Motorregelgröße von demjenigen Wert abweicht, welcher am gesetzten Arbeitspunkt dem angefahrenen Wert der Motorsteuergröße zugeordnet ist, einen auf einer anderen Kennlinie liegenden temporären Hilfs-Arbeitspunkt aus dem Feld der Arbeitspunkte zu ermitteln und zu setzen, der einer von dem Vorgabe-Wert der Soll-Volumenstromstärke verschiedenen Hilfswert der Soll-Volumenstromstärke zugeordnet ist, und einen dem gesetzten Hilfs-Arbeitspunkt zugeordneten Hilfswert der Motorsteuergröße anzufahren;
- bei Detektieren eines Abweichungsfalls auch bezüglich des aktuell gesetzten Hilfs-Arbeitspunkts ausgehend vom aktuell gesetzten Hilfs-Arbeitspunkt das Ermitteln, Setzen, Anfahren und Erfassen iterativ auszuführen, bis nach dem Anfahren eines jeweils gesetzten neuen Hilfs-Wertes der Motorsteuergröße keine Abweichung des erfassten Wertes der Motorregelgröße von dem Wert vorliegt, der dem Hilfs-Wert der Motorsteuergröße am aktuell gesetzten Hilfs-Arbeitspunkt zugeordnet ist, und der so gesetzte Hilfs-Arbeitspunkt somit verifiziert ist;
- ausgehend vom verifizierten Hilfs-Arbeitspunkt einen hinsichtlich des momentanen Wertes der Motorsteuergröße nächstliegenden Arbeitspunkt auf der ersten Kennlinie als neuen gesetzten Arbeitspunkt zu ermitteln und einzustellen, sowie
- im Falle des Detektierens eines erneuten Abweichungsfalls bezüglich des neuen gesetzten Arbeitspunktes der Motorregelgröße zur Verfahrensführung ab dem Ermitteln und Setzen eines auf einer anderen Kennlinie liegenden Hilfs-Arbeitspunktes zurückzuverzweigen; und
- eine Überwachungseinheit (702.2), die ausgebildet ist,
- nach dem Anfahren des jeweils gesetzten Wertes oder Hilfs-Wertes der Motorsteuergröße regelmäßig wiederholt einen momentanen Wert der Motorregelgröße zu erfassen, zum Detektieren und gegebenenfalls Signalisieren des Abweichungsfalls.

11. Regelvorrichtung (702) nach Anspruch 10, bei der
- die Steuereinheit (702.1) ausgebildet ist, das Feld von Arbeitspunkten entweder teilweise oder vollständig in Form einer oder mehrerer Berechnungsvorschriften zur Darstellung einer jeweiligen mathematischen Funktion bereitzustellen, die eine Abhängigkeit der Leistungsaufnahme des EC-Motors (704), oder eine Abhängigkeit eines Produkts der Steuerspannung des EC-Motors (704) und der Leistungsaufnahme des EC-Motors (704) von der Steuerspannung des EC-Motors (704), oder eine Abhängigkeit der Drehzahl des EC-Motors (704) von der Steuerspannung des EC-Motors (704) abbildet oder abbilden.

12. Ventilatorvorrichtung mit einem Ventilator (706), der eine Fördereinrichtung zum Erzeugen eines Gas-Volumenstroms und einen die Fördereinrichtung antreibenden EC-Motor (704) aufweist, zusätzlich umfassend eine mit dem EC-Motor in Signalkommmunikation stehende Regelvorrichtung (702) nach Anspruch 10 oder 11.

13. Lüftungsgerät (700) mit einer Ventilatorvorrichtung nach Anspruch 12 zwischen einem Einlass (714) und einem Auslass (716) des Lüftungsgeräts (700) und einer Leitvorrichtung zum Leiten des von der Ventilatorvorrichtung erzeugten Gas-Volumenstroms zwischen dem Einlass (714) und dem Auslass (716).

14. Computerprogramm-Produkt, enthaltend ausführbaren Programmcode zur Steuerung der Durchführung eines Verfahrens nach mindestens einem der Ansprüche 1 bis 9 durch eine programmierbare Prozessorvorrichtung.

## Claims

1. Method (300) for controlling a fan (706), operated with an EC Motor (704), of a ventilation device (700) to an operating point, for achieving and maintaining a predetermined target volume flow rate of the ventilation device (700) without using a pressure sensor and without using a volumetric current sensor, comprising
- provision of a field of operating points for different values of the target volume flow rate (310), wherein
- the different values of the target volume flow rate have a difference of at least 0.5 m³/h from one another,
- a respective operating point for a respectively given value of a motor control variable of the EC motor (704) specifies which value of a motor regulating variable of the EC motor (704) achieves a respective target volume flow rate of the ventilation device (700) to be generated by the fan (706),
- the motor control variable correlates positively with a power consumption of the EC motor (704) and the motor regulating variable correlates positively with a speed of the EC motor (704) and wherein
- the operating points assigned to a respective target volume flow rate, in the case of different pressure differences between input and output of the ventilation device (700), are referenced in their entirety hereinafter as a characteristic curve assigned to the target volume flow rate;
- receiving a default value of the target volume flow rate (312);
- identifying and setting an operating point on a first characteristic curve, which is assigned to the default value of the target volume flow rate, and approaching the value of the motor control variable (314) assigned to the set operating point;
- regularly repeated acquisition of an actual value of the motor regulating variable after approaching the value of the motor control variable (316) for the detection of a deviation event, in which a value of the motor regulating variable deviates from the value which at the set operating point is assigned to the approached value of the motor control variable (318);
- in reaction to the presence of a deviation event: identifying and setting a temporary auxiliary operating point from the field of the operating points which is assigned to an auxiliary value of the target volume flow rate, and wherein at the detection of a deviation event also with respect to the currently set auxiliary operating point starting from the currently set auxiliary operating point the identification, setting, approaching and acquisition are carried out iteratively (320, 322) until after the approaching of a respectively set new auxiliary value of the motor control variable there is no deviation of the identified value of the motor regulating variable from the value which is assigned to the auxiliary value of the motor control variable at the currently set auxiliary operating point, and the thus set auxiliary operating point is thus verified (324);
- starting from the verified auxiliary operating point: identification and approaching of an operating point, in particular an operating point nearest with respect to the actual value of the motor control variable, on the first characteristic curve as new set operating point (326), and
- in the case of detecting a renewed deviation event with respect to the new set operating point of the motor regulating variable: repetition of the described procedure from the identification and setting of an auxiliary operating point lying on another characteristic curve.

2. Method according to claim 1, in which the determination of the nearest operating point as distance measure between two operating points, a difference of values of the motor control variable or of the motor regulating variable or of a product of the motor control variable with the motor regulating variable at the operating points concerned is used.

3. Method according to claim 1 or 2, in which
- the field of operating points is provided either partially or entirely in the form of one or more calculation rules for the representation of a respective mathematical function, which forms or form a dependence of the power consumption of the EC motor (704), or a dependence of a product of the control voltage of the EC motor (704) and the speed of the EC motor (704), or a dependence of the speed of the EC motor (704) in each case on the control voltage of the EC motor (704).

4. Method according to claim 3, in which reversibly unambiguously a value of the volume flow rate is assigned to the at least one calculation rule; in particular additionally comprising for the detection of the deviation event:
- comparison of a value pair,
consisting on the one hand of an actual value of the power consumption of the EC motor (704), or of the product of the control voltage of the EC motor (704) and the speed of the EC motor (704), or of the speed of the EC motor (704),
consisting on the other hand of an actual value of the detected control voltage of the EC motor (704),
with a value pair identified with reference to the calculation rule for the actual value of the acquired control voltage of the EC motor (704).

5. Method according to claim 3 or 4, comprising
- provision of a first calculation rule, which represents a first set of operating points, which are all assigned to a predetermined maximum target volume flow rate,
- provision of a second calculation rule, which represents a second set of operating points, which are all assigned to a predetermined minimum target volume flow rate, and
- identification of the operating point to be set or of the temporary auxiliary operating point lying on another characteristic curve by interpolation by using the first and second calculation rule and a difference between the target or auxiliary volume flow rate to be set and the minimum and the maximum target volume flow rate.

6. Method according to at least one of claims 3 to 5, in which the calculation rule contains an evaluation of a polynomial of at least the third degree.

7. Method according to at least one of claims 3 to 6, in which the calculation rule comprises a first partial rule independent from the respective individual fan (706) and a second partial rule independent from the respective fan (706).

8. Method according to at least one of claims 3 to 7, additionally comprising prior to the setting of an operating point:
- checking with reference to the at least one calculation rule for different target volume flow rates, whether a respective identified operating point is assigned to two or more target volume flow rates of the ventilation device (700),
- if yes: checking, whether a predetermined criterion is present for carrying out an accelerated procedure circumventing the described procedure from the setting of the operating point;
- if the predetermined criterion is present: identifying and setting a circumventing operating point using the calculation rule, wherein the circumventing operating point is assigned to one single volume flow rate at a separation of at least 0.5 m³/h and maximum 10% from the default value of the target volume flow rate; and
- subsequent approaching of the value of the motor control variable assigned to the set circumventing operating point.

9. Method according to at least one of the preceding claims, in which for acquiring the motor regulating variable of the EC motor (704) a position signal provided by the EC motor (704) is acquired and from several position signals acquired at different points in time a variable dependent on the speed of the EC motor (704) is determined.

10. Regulating device (702) for regulating a fan (706), operated with an EC Motor (704), of a ventilation device (700) to an operating point, for achieving and maintaining a predetermined target volume flow rate of the ventilation device (700) without using a pressure sensor and without using a volumetric current sensor, comprising
- a control unit (702.1), which is configured
- to receive a default value of the target volume flow rate and from a field of operating points for different values of the target volume flow rate, which have a difference of at least 0.5 m³/h from one another, to identify and to set an operating point on a first characteristic curve, which is assigned to the default value of the target volume flow rate, and to approach a value of the motor control variable which is assigned to the set operating point, wherein
- a respective operating point for a respectively given value of a motor control variable of the EC motor (704) specifies which value of a motor regulating variable of the EC motor (704) achieves a respective value, to be generated by the fan (706), of the target volume flow rate of the ventilation device (700),
- the motor control variable correlates positively with a power consumption of the EC motor (704) and the motor regulating variable correlates positively with a speed of the EC motor (704) and wherein
- the operating points assigned to a respective target volume flow rate, in the case of different pressure differences between input and output of the ventilation device (700), are referenced in their entirety hereinafter as a characteristic curve assigned to the target volume flow rate;
wherein the control unit (702.1) is additionally configured
- in reaction to the presence of a deviation event, in which a value of the motor regulating variable deviates from the value which at the set operating point is assigned to the approached value of the motor control variable, to identify and to set a temporary auxiliary operating point, lying on another characteristic curve, from the field of the operating points, which is assigned to an auxiliary value of the target volume flow rate which is different from the default value of the target volume flow rate, and to approach an auxiliary value of the motor control variable which is assigned to the set auxiliary operating point;
- on the detection of a deviation event also with respect to the currently set auxiliary operating point starting from the currently set auxiliary operating point to carry out iteratively the identifying, setting, approaching and acquiring until after the approaching of a respectively set new auxiliary value of the motor control variable there is no deviation of the identified value of the motor regulating variable from the value which is assigned to the auxiliary value of the motor control value at the currently set auxiliary operating point, and the thus set auxiliary operating point is thus verified;
- starting from the verified auxiliary operating point, to identify and to set an operating point, nearest with respect to the actual value of the motor control variable, on the first characteristic curve as new set operating point, and
- in the case of detecting a renewed deviation event with respect to the new set operating point of the motor regulating variable, to branch back to the procedure from the identification and setting of an auxiliary operating point lying on another characteristic curve; and
- a monitoring unit (702.2) which is configured,
- after approaching the respective set value or auxiliary value of the motor control variable to identify an actual value of the motor control variable at repeated regular intervals, for the detection and where necessary the signalling of the deviation event.

11. Regulating device (702) according to claim 10, in which
- the control unit (702.1) is configured to provide the field of operating points either partially or entirely in the form of one or more calculation rules for the representation of a respective mathematical function, which forms or form a dependence of the power consumption of the EC motor (704), or a dependence of a product of the control voltage of the EC motor (704) and the power consumption of the EC motor (704) on the control voltage of the EC motor, or a dependence of the speed of the EC motor (704) on the control voltage of the EC motor (704).

12. Fan device having a fan (706), which has a conveying device for the generation of a gas volume flow and an EC motor (704) driving the conveying device, additionally comprising a regulating device (702) according to claim 10 or 11 being in signal communication with the EC motor.

13. Ventilation device (700) having a fan device according to claim 12 between an inlet (714) and an outlet (716) of the ventilation device (700) and a guide device for guiding the gas volume flow generated by the fan device between the inlet (714) and the outlet (716).

14. Computer programme product containing executable programme code for controlling the implementation of a method according to at least one of claims 1 to 9 by means of a programmable processor device.

## Revendications

1. Procédé (300) pour la régulation d'un ventilateur (706) commandé avec un moteur EC (704) d'un appareil de ventilation (700) sur un point de fonctionnement, pour obtenir et maintenir une intensité de débit volumique de consigne prédéterminée de l'appareil de ventilation (700) sans l'utilisation d'un capteur de pression et sans l'utilisation d'un capteur de débit volumique, comprenant
- la mise à disposition d'un champ de points de fonctionnement pour différents valeur de l'intensité de débit volumique de consigne (310),
- les différentes valeurs de l'intensité de débit volumique de consigne présentant une différence entre elles d'au moins 0,5 m³/h,
- un point de fonctionnement correspondant pour une valeur donnée d'une grandeur de commande du moteur EC (704) indiquant quelle valeur d'une grandeur de régulation du moteur EC (704) permet d'obtenir une intensité de débit volumique de consigne de l'appareil de ventilation (700) à obtenir du ventilateur (706),
- la grandeur de commande du moteur étant corrélée positivement avec une consommation de puissance du moteur EC (704) et la grandeur de régulation du moteur étant corrélée positivement avec une vitesse de rotation du moteur EC (704) et
- les points de fonctionnement correspondant à une intensité de débit volumique de consigne correspondante pour différentes différences de pression entre l'entrée et la sortie de l'appareil de ventilation (700) étant désignés dans leur ensemble par la suite comme la courbe caractéristique correspondant à l'intensité de débit volumique de consigne ;
- réception d'une valeur par défaut de l'intensité de débit volumique (312) ;
- détermination et définition d'un point de fonctionnement sur une première courbe caractéristique qui correspond à la valeur par défaut de l'intensité de débit volumique de consigne et approche de la valeur de la grandeur de commande du moteur (314) correspondant au point de fonctionnement défini ;
- mesure régulièrement répétée d'une valeur instantanée de la grandeur de régulation du moteur après l'approche de la valeur de la grandeur de commande de moteur (316) pour la détection d'un cas de déviation, dans lequel une valeur de la grandeur de régulation de moteur s'écarte de la valeur qui correspond (318), au niveau du point de fonctionnement défini, à la valeur démarrée de la grandeur de commande du moteur ;
- en réaction à l'existence du cas de déviation : détermination et définition d'un point de fonctionnement auxiliaire temporaire à partir du champ des points de fonctionnement, qui correspond à une valeur auxiliaire de l'intensité de débit volumique de consigne et, lors de la détection d'un cas de déviation, également par rapport au point de fonctionnement auxiliaire actuellement défini, à partir du point de fonctionnement auxiliaire actuellement défini, la détermination, la définition, l'approche et la mesure étant effectuée (320, 322) de manière itérative jusqu'à ce que, après l'approche d'une nouvelle valeur auxiliaire définie de la grandeur de commande de moteur, il n'existe aucun écart de la valeur mesurée de la grandeur de régulation de moteur de la valeur, qui correspond à la valeur auxiliaire de la grandeur de commande du moteur au niveau du point de fonctionnement actuellement défini, et le point de fonctionnement auxiliaire défini étant ainsi vérifié (324) ;
- à partir du point de fonctionnement auxiliaire vérifié, détermination et approche d'un point de fonctionnement, plus particulièrement d'un point de fonctionnement le plus proche en ce qui concerne la valeur instantanée de la grandeur de commande de moteur sur la première courbe caractéristique comme un nouveau point de fonctionnement (326) défini, et
- dans le cas d'une détection d'un nouveau cas de déviation par rapport au nouveau point de fonctionnement défini de la grandeur de régulation de moteur : répétition de l'exécution du procédé décrit à partir de la détermination et de la définition d'un point de fonctionnement auxiliaire se trouvant sur l'autre courbe caractéristique.

2. Procédé selon la revendication 1, dans lequel, lors de la détermination du point de fonctionnement le plus proche, en tant que mesure de distance entre deux points de fonctionnement, une différence de valeurs absolues de la grandeur de commande de moteur ou de la grandeur de régulation de moteur ou d'un produit de la grandeur de commande de moteur et de la grandeur de régulation de moteur est utilisé au niveau des points de fonctionnement concernés.

3. Procédé selon la revendication 1 ou 2, dans lequel
- le champ de points de fonctionnement est mis à disposition soit partiellement soit entièrement sous la forme d'une ou de plusieurs règles de calcul pour la représentation d'une fonction mathématique correspondante, qui représente une dépendance de la consommation de puissance du moteur EC (704) ou une dépendance d'un produit de la tension de commande du moteur EC (704) et de la vitesse de rotation du moteur EC (704) ou une dépendance de la vitesse de rotation du moteur EC (704) de la tension de commande du moteur EC (704).

4. Procédé selon la revendication 3, dans lequel, à l'au moins une consigne de calcul, correspond inversement, de manière univoque, une valeur de l'intensité de débit volumique ; plus particulièrement comprenant en outre, pour la détection du cas de déviation :
- comparaison d'une paire de valeurs,
constituée d'une part d'une valeur instantanée de la consommation de puissance du moteur EC (704) ou du produit de la tension de commande du moteur EC (704) et de la vitesse de rotation du moteur EC (704) ou de la vitesse de rotation du moteur EC (704),
constituée d'autre part d'une valeur instantanée de la tension de commande mesurée du moteur EC (704),
avec une valeur de paire déterminée à l'aide de la règle de calcul pour la valeur instantanée de la tension de commande mesurée du moteur EC (704).

5. Procédé selon la revendication 3 ou 4, comprenant
- mise à disposition d'une première règle de calcul qui représente un premier ensemble de points de fonctionnement qui correspondent tous à une intensité de débit volumique de consigne maximale prédéterminée,
- mise à disposition d'une deuxième règle de calcul qui représente un deuxième ensemble de points de fonctionnement qui correspondent tous à une intensité de débit volumique de consigne minimale prédéterminée, et
- détermination du point de fonctionnement à définir ou du point de fonctionnement auxiliaire temporaire se trouvant sur l'autre courbe caractéristique par interpolation à l'aide de la première ou de la deuxième règle de calcul et d'une différence entre l'intensité de débit volumique de consigne ou auxiliaire à définir et l'intensité de débit volumique de consigne minimale et ainsi que l'intensité de débit volumique de consigne maximale.

6. Procédé selon au moins l'une des revendications 3 à 5, dans lequel la règle de calcul contient une analyse d'un polynôme de troisième degré au moins.

7. Procédé selon au moins l'une des revendications 3 à 6, dans lequel la règle de calcul comprend une première règle partielle indépendante du ventilateur (706) individuel correspondant et une deuxième règle partiellement dépendant du ventilateur (706) correspondant.

8. Procédé selon au moins l'une des revendications 3 à 7, comprenant en outre, avant la définition d'un point de fonctionnement :
- vérification, à l'aide de l'au moins une règle de calcul, pour différentes intensités de débit volumique de consigne, si un point de fonctionnement déterminé correspond à deux intensités de débit volumique de consigne ou plus de l'appareil de ventilation (700),
- si oui : vérification si un critère prédéterminé pour la réalisation d'une exécution accélérée du procédé existe en contournant l'exécution du procédé décrit à partir de la définition du point de fonctionnement :
- si le critère prédéterminé existe : détermination et définition d'un point de fonctionnement de contournement à l'aide de la règle de calcul, le point de fonctionnement de contournement correspondant à une seule intensité de débit volumique à une distance d'au moins 0,5 m³/h et au maximum de 10 % de la valeur par défaut de l'intensité de débit volumique de consigne ; et
- approche de la valeur de la grandeur de commande du moteur correspondant au point de fonctionnement de contournement défini.

9. Procédé selon au moins l'une des revendications précédentes, dans lequel, pour la mesure de la grandeur de régulation du moteur EC (704), un signal de position mis à disposition par le moteur EC (704) est mesuré et, à partir de plusieurs signaux de position mesurés à des moments différents, une grandeur dépendant de la vitesse de rotation du moteur EC (704) est déterminée.

10. Dispositif de régulation (702) pour la régulation d'un ventilateur (706) d'un appareil de ventilation (700), commandé avec un moteur EC (704), sur un point de fonctionnement, afin d'obtenir et de maintenir une intensité de débit volumique de consigne prédéterminée de l'appareil de ventilation (700) sans l'utilisation d'un capteur de pression et sans l'utilisation d'un capteur de débit volumique, comprenant :
- une unité de commande (702.1) qui est conçue
- pour recevoir une valeur par défaut de l'intensité de débit volumique de consigne et déterminer et définir, à partir d'un champ de points de fonctionnement, pour différentes valeurs de l'intensité de débit volumique de consigne, qui présentent une valeur absolue de différence d'au moins 0,5 m³/h entre elles, un point de fonctionnement sur une première courbe caractéristique, qui correspond à la valeur par défaut de l'intensité de débit volumique de consigne, et pour approcher une valeur de la grandeur de commande de moteur correspondant au point de fonctionnement défini,
- un point de fonctionnement correspondant pour une valeur donnée d'une grandeur de commande de moteur du moteur EC (704) indiquant quelle valeur d'une grandeur de régulation de moteur du moteur EC (704) permet d'obtenir une valeur de l'intensité de débit volumique de consigne de l'appareil de ventilation (700) à obtenir par le ventilateur (706),
- la grandeur de commande de moteur étant corrélée positivement avec une consommation de puissance du moteur EC (704) et la grandeur de régulation du moteur étant corrélée positivement avec une vitesse de rotation du moteur EC (704) et
- les points de fonctionnement correspondant à une intensité de débit volumique de consigne correspondante pour différentes différences de pression entre l'entrée et la sortie de l'appareil de ventilation (700) étant désignés dans leur ensemble par la suite comme la courbe caractéristique correspondant à l'intensité de débit volumique de consigne ;
l'unité de commande (702.1) étant en outre conçue
- pour déterminer et définir, en réaction à l'existence d'un cas de déviation, dans lequel une valeur de la grandeur de régulation du moteur s'écarte de la valeur qui correspond, au niveau du point de fonctionnement défini, à la valeur approchée de la grandeur de commande de moteur, un point de fonctionnement auxiliaire temporaire se trouvant sur une autre courbe caractéristique à partir du champ de points de fonctionnement, qui correspond à une valeur auxiliaire de l'intensité de débit volumique de consigne différente de la valeur par défaut de l'intensité de débit volumique de consigne et d'approcher une valeur auxiliaire de la grandeur de commande de moteur correspondant au point de fonctionnement auxiliaire défini ;
- pour n'exécuter, lors de la détection d'un cas de déviation également par rapport au point de fonctionnement auxiliaire actuellement défini, à partir du point de fonctionnement auxiliaire actuellement défini, la détermination, la définition, l'approche et la mesure de manière itérative, jusqu'à ce que, après l'approche d'une nouvelle valeur auxiliaire définie de la grandeur de commande de moteur, il n'existe aucun écart de la valeur mesurée de la grandeur de régulation de moteur par rapport à la valeur qui correspond à la valeur auxiliaire de la grandeur de commande du moteur au niveau du point de fonctionnement auxiliaire actuellement défini et le point de fonctionnement auxiliaire ainsi défini est vérifié ;
- pour déterminer et régler, à partir du point de fonctionnement auxiliaire vérifié, un point de fonctionnement le plus proche en ce qui concerne la valeur instantanée sur la première courbe caractéristique en tant que nouveau point de fonctionnement défini, ainsi que
- pour retourner, dans le cas d'une détection d'un nouveau cas de déviation par rapport au nouveau point de fonctionnement défini de la grandeur de régulation du moteur, à l'exécution du procédé à partir de la détermination et de la définition d'un point de fonctionnement auxiliaire se trouvant sur une autre courbe caractéristique ; et
- une unité de surveillance (702.2) qui est conçue
- pour mesurer, après l'approche de la valeur définie ou de la valeur auxiliaire de la grandeur de commande du moteur, de manière répétée, une valeur instantanée de la grandeur de régulation du moteur, pour la détection et, le cas échéant, la signalisation du cas de déviation.

11. Dispositif de régulation (702) selon la revendication 10, dans lequel
- l'unité de commande (702.1) est conçue pour mettre à disposition le champ de points de fonctionnement soit partiellement soit entièrement sous la forme d'une ou plusieurs règles de calcul pour la représentation d'une fonction mathématique correspondante, qui représente une dépendance de la consommation de puissance du moteur EC (704) ou une dépendance d'un produit de la tension de commande du moteur EC (704) et de la consommation de puissance du moteur EC (704) en fonction de la tension de commande du moteur EC (704) ou une dépendance de la vitesse de rotation du moteur EC (704) en fonction de la tension de commande du moteur EC (704).

12. Dispositif de ventilateur avec un ventilateur (706) qui comprend un dispositif de convoyage pour la production d'un débit volumique de gaz et un moteur EC (704) entraînant le dispositif de convoyage, comprenant en outre un dispositif de régulation (702) en communication de signaux avec le moteur EC, selon la revendication 10 ou 11.

13. Appareil de ventilation (700) avec un dispositif de ventilateur selon la revendication 12 entre une entrée (714) et une sortie (716) de l'appareil de ventilation (700) et un dispositif de guidage pour le guidage du débit volumique de gaz généré par le dispositif de ventilateur entre l'entrée (714) et la sortie (716).

14. Produit formant programme informatique contenant un code de programme exécutable pour la commande de l'exécution d'un procédé selon au moins l'une des revendications 1 à 9 par un dispositif à processeur programmable.
